(19) Europäisches Patentamt
European Patent Office
Office européen des brevets

(11) **EP 1 638 011 A2**

(12) **EUROPEAN PATENT APPLICATION**

(43) Date of publication:
22.03.2006 Bulletin 2006/12

(51) Int Cl.:
*G06F 17/18* (2006.01)    *G06Q 40/00* (2006.01)

(21) Application number: 05255773.3

(22) Date of filing: 16.09.2005

| | |
|---|---|
| (84) Designated Contracting States:<br>AT BE BG CH CY CZ DE DK EE ES FI FR GB GR HU IE IS IT LI LT LU LV MC NL PL PT RO SE SI SK TR<br>Designated Extension States:<br>AL BA HR MK YU | (72) Inventor: **Cagan, Christopher L.**<br>**Anaheim, CA 92807 (US)** |
| (30) Priority: **17.09.2004 US 944593** | (74) Representative: **Miller, James Lionel Woolverton et al**<br>**Kilburn & Strode,**<br>**20 Red Lion Street**<br>**London WC1R 4PJ (GB)** |
| (71) Applicant: **FIRST AMERICAN REAL ESTATE SOLUTIONS, L.P.**<br>**Anaheim CA 92807 (US)** | |

(54) **Method and apparatus for constructing a forecast standard deviation for automated valuation modeling**

(57)    A method and apparatus (100)for deriving Sigmas or forecast standard deviations for valuations of properties valued by an automated valuation model (122) without reference to the underlying mathematical architecture and without reference to a particular data structure of the automated valuation model and for providing right-tail (336) and responsive confidence scores (352) consistent with these Sigmas for each property valued by an automated valuation model.

SIGMA GENERATION

Fig. 2.

**Description**

The present invention relates to property valuation, and more specifically to a method of deriving a forecast standard deviation for the valuations given by any automated valuation model.

The valuations provided by automated valuation models are a popular choice for lenders and other users of real estate valuation data. Automated valuation models have numerous advantages over more traditional means of valuing property. First, automated valuation models are considerably less expensive than individual appraisals. Second, they can be performed almost instantaneously, as opposed to the one or two weeks required in scheduling, performing and receiving a result from an appraiser. Third, when implemented correctly and given enough data, automated valuation models provide highly accurate valuations.

However, because questionnaire conditions for providing valuations and the quality of computer programming are not always equal different automated valuation models have many and varying degrees of accuracy. Automated valuation models may be highly accurate in certain price ranges and have very low accuracy in others. Automated valuation models may be very accurate in certain geographic locations and very inaccurate in others. There are many providers of automated valuations of real estate. However, there is currently no uniform standard by which to readily compare the accuracy of the valuations provided by the many automated valuation providers.

Confidence scores are the most commonly used means of describing the accuracy of an automated valuation. While these are somewhat useful, they are rarely comparable from automated valuation model to automated valuation model. Some confidence scores are represented as letter grades such as: "A," "B," "C," "D" and "F;" corresponding in order from an accurate valuation to a very inaccurate valuation. Other automated valuation model confidence scores are represented as percentages. The lack of a uniform method of comparing automated valuation models against one another for accuracy has led to the need for a Forecast Standard Deviation that is separate from the internal operations of an automated valuation model.

Several large users of automated valuations have recently requested that this be remedied, at least in part, by the inclusion of a measure of the Sigma or Forecast Standard Deviation of each valuation given by an automated valuation model. This number, provided along with a valuation, will help inform the valuation information user of the estimated accuracy of that valuation. If the distribution of the differences between automated valuations and sale prices followed a perfect normal distribution with its bell-shaped curve, then approximately 68.3% of valuations would be no more than one standard deviation above or below the true value of the subject property. Thus, a declared Forecast Standard Deviation of 0.10 or ten percent suggests to the user that 68.3% of valuations with this declared Forecast Standard Deviation will be no more than ten percent above or below the true value, usually as measured by sale price, of the subject property. The use of a Forecast Standard Deviation, also referred to as "Sigma," will enable valuation users to more readily compare the accuracy of automated valuations provided by automated valuation vendors.

The Sigma or Forecast Standard Deviation is very similar to a traditional standard deviation. It represents an estimate of the expected spread or accuracy of a valuation with respect to the underlying "true value" of a property, where "true value" is usually measured by actual sale price of the property. Sigma is individually generated for each individual property along with its automated valuation. An individual valuation is either accurate or it is not; it differs from the "true value" of its subject property by a definite amount or percentage. Presumably the valuation is either accurate or inaccurate, regardless of what Sigma is declared. Sigma, or a standard deviation in general, is a property of a collective distribution or a distribution of valuation errors rather than of an individual valuation. Forecast Standard Deviations are generated on a collective distribution, but then assigned to individual property valuations.

The purpose of generating Sigmas on an individual basis for an individual property is that by generating Sigmas individually, it is possible to compare the Sigmas generated individually with the actual errors, the variance between the automated valuation "value" of a property and its actual sale price, themselves generated individually. These comparisons can be evaluated and examined on a collective basis. Some individual Sigmas will be low, on the order of 8%. These Sigmas will be low typically because the automated valuation has found abundant "comparable sales" data to use in its work and an accurate valuation of the subject property may therefore be expected. Other Sigmas will be high, perhaps 20%; often because "comparable sales" data is weak or sparse. In the same way, some valuation errors will be small, perhaps +2% or -3%, valuations 2% above or 3% below the sale price, while others will be large, perhaps +22% or -18%, valuations 22% above or 18% below the sale price.

The Sigma is an estimate of the accuracy of a valuation produced by an automated valuation model. Although individual Sigmas may be large or small, if Sigma is properly generated and understood, then on a collective basis, about 68.3% of the valuation errors from "true value," usually a sale price, will be within plus or minus one Sigma above or below zero. Following standard normal distribution theory, about 95% of the valuation errors will be within plus or minus two Sigmas from zero; and so on. The concept of Forecast Standard Deviation is easier to understand using the concept of "Sigma units." The error made by an automated valuation model in Sigma units is defined as the actual error that it made relative to true value, divided by the Sigma that the automated valuation model had assigned.

For instance, suppose that an automated valuation model assigns a valuation of $520,000 to a particular property. Because in this case there existed a large number of comparable nearby properties that had recently sold, the automated valuation model expects this valuation to be accurate, to be close to the true value, and has assigned a Sigma, a Forecast Standard Deviation, of 8% to this valuation. Suppose further that this property's true value, usually measured by sale price, but sometimes by appraised value or another measure of value, is $500,000. The model's estimate was $20,000 too high. Since (520,000 - 500,000)/(500,000) = 4%, the model had a valuation error of +4%. In Sigma units this error was (4%)/(8%) = +0.50 or +50%. On a collective basis, one would expect approximately 68.3% of valuation errors to be within plus or minus one Sigma unit from zero; one would expect approximately 95% of errors to be within plus or minus two Sigma units from zero, and so on.

Another way to look at the relationship between Sigma and valuation errors is to imagine the total set of valuations as divided into subsets. Some properties, when they are valued, will be assigned a low Sigma, for example 8%, and others a higher Sigma, for example 20%. Imagine that one collected the properties that received a Sigma of 8% into a subset of their own. Some of these valuations would be above, some below, the true value of their subject properties. But, hopefully, just as in an ideal bell-shaped distribution about 68.3% of the distribution falls within plus or minus one standard deviation from the mean, and about 95% falls within plus or minus two standard deviations from the mean, one would expect about 68.3% of the valuation errors to be no larger than plus/minus one Sigma - in this case, plus or minus 8%. In the same way, one would expect about 95% of the valuation errors in this subset to be no larger than plus or minus two Sigmas - in this case, plus or minus 16%. Whether looking at a subset such as that described above, or at a large set of all the properties sold in a county, state, or nation during a certain period of time, it is possible to determine the distribution of valuation errors as measured in Sigma units.

If the results are unexpected, they must be corrected. For instance, suppose that only 55% of valuation errors are within plus or minus one Sigma unit. In the case of the "8% subset," this would mean that only 55% of valuation errors were within plus or minus 8%. Since 55% is lower than 68.3%, this means that the vendor has been overly optimistic about its automated valuation model, perhaps to increase sales. The vendor has declared a Sigma that is smaller and more accurate than it actually was. In this case, a Sigma of 9% or 10% would be more appropriate. The above example shows an example of how the performance of an automated valuation model and its Sigma can be evaluated for correctness.

Once it has been verified that the Sigmas declared by an automated valuation model are reasonably faithful representations of the actual distribution of valuation errors, it is then possible for a user to compare automated valuation models with each other by comparing their Sigmas that are now presumed to be correct. Normally, a user would prefer valuations which came with small Sigmas, because these valuations are believed to be more accurate. This process of preferment among vendor models could be made individually for each property or collectively by looking at the mean or median Sigma for an entire county, state, price range, or other large set of properties. Once again, it is presumed that the Sigmas have been verified as faithful and that no vendor has given its model undeserved praise in the form of an unjustifiably small Sigma. A vendor which systematically does this should be viewed with suspicion.

A Sigma or Forecast Standard Deviation should be derived for a property's valuation, strictly and ideally, by investigating the detailed mathematical formula that the automated valuation model uses to value a property, as to all of its statistical properties. This is possible in theory but difficult in practice. First, the logic, algorithms, and formulae included in automated valuation models are extensive and complicated. There are often dozens if not hundreds of calculations and evaluations, with various decisions to be made and branches of logic to be taken at different points of the development. Automated valuation models also frequently employ special mathematical functions such as logarithms, exponential functions, square roots, and many more advanced functions. Furthermore, some automated valuation models include "neural nets" which have no explicit mathematical formula. They have the advantage of having a "learning capability" but the disadvantage of being a "black box" whose workings is difficult if not impossible to fathom.

A Forecast Standard Deviation could be rigorously and theoretically computed for a model with complete knowledge of its formulas and algorithms, including branching rules, and assuming the model had no "neural net" component; this is in practice very difficult to perform, document, and troubleshoot. It also has the drawback of having to be rebuilt every time the underlying automated valuation model has its logic improved, modified, or "tweaked." This procedure has the further disadvantage of lacking the ability to enable a comparison of the Forecast Standard Deviation of competing products with each other because each requires a knowledge of the competitor's mathematical formulas and algorithms which is not typically available.

Sigmas are assigned for individual property valuations, but may be then evaluated on a collective basis. The sets of Sigmas generated within entire states, cities, zip codes or price ranges could be used to test the average accuracy of an automated valuation model in an area or price range, or to compare the purported accuracy of one valuation model with another by comparing Sigmas. Sigmas may also be used to test the accuracy of the declared Sigmas themselves. If the automated valuation vendor is not being too optimistic or pessimistic about their own Sigmas, then, for instance, about 68.3% of the valuations should be within plus or minus "one Sigma" of the true sale price. Although Sigma itself may be larger or smaller for different individual properties, on the whole we should still expect about 68.3% of the valuations to be within one of their "own Sigmas" of the sale price. Sigmas generated for each property could, over time, be used to test the accuracy of individual valuations in any area or price-range.

The method of this invention, therefore, does not depend upon the architecture of a particular automated valuation model but instead will be independent. This will enable the evaluation, by the same means, of the accuracy of any automated valuation model.

The method of this invention makes it possible to compute and evaluate a Forecast Standard Deviation for many different properties using many different automated valuation models, even without knowing the mathematical formulas and algorithms they use. Thus, a vendor firm may generate and evaluate and compare Sigmas for the automated valuation models of their competitors. Furthermore, the method of this invention will make it possible to re-compute Sigma even if the underlying valuation algorithms and formulas are revised, "tweaked," or experimented with in various ways, whether or not one knows how the formulas are being modified.

It is therefore an object of this invention to provide a method of creating Sigma values for each property valued by an automated valuation model. It is an additional object of this invention to provide a reliable, consistent means by which users of automated valuation models may be able to evaluate the accuracy of any automated valuation model. It is also an object of this invention to provide this method without reference to any of the underlying mathematical or logical calculations done by any particular automated valuation model. These and other objectives of the present invention will become apparent from the following description of the invention.

The present invention is as claimed in the independent claims. Preferred optional features are as claimed in the dependent claims. According to the present invention, a method and apparatus are described whereby Sigmas or Forecast Standard Deviations are generated for automated valuation model valuations. The Sigmas generated may be used to calculate right-tail confidence scores and responsive confidence scores related to the properties valued.

The present invention provides an "empirical" approach to the building of a Forecast Standard Deviation which does not require the possession of the mathematical formulas and algorithms of the model. Using the literal and empirical performance information of the valuation model tested upon a large set of properties, an elaborate system of subsets, slices or tranches are constructed along the "natural lines" appropriate to the automated valuation model (AVM). This results in building an apparatus that assigns each property valuation to one of many, potentially thousands, of possible Sigmas. The apparatus and the Sigmas produced are validated. The procedure is linked in a consistent and coherent way with right-tail confidence scores and responsive confidence scores.

The empirical approach has the advantage that it is not necessary to know the explicit formula of the automated valuation model. As such, it may be applied over and over again to any automated valuation model as that model is tested, tweaked, and improved, without needing to know what was changed or why it was changed. Most important, it may be used to build a system of Sigmas, which in turn may be checked, for an array of competing models without knowledge of their mathematical formulae and algorithms. A user or vendor can then compare the performance of different valuation models and their Sigmas. In addition, a user or vendor can test the accuracy and validity of the Sigmas provided by other vendors.

The first step in the method of this invention is to construct a foundational data set that is as nearly exhaustive as possible. In the preferred embodiment, a data set consisting of all residential properties in the nation or in a collection of states or counties, that were sold during a fixed period of time, typically three or six months in length, is extracted, primarily from county recorder's office information. Automated valuations are constructed for each of the properties in this exhaustive data set. It is necessary to instruct the model to ignore the current subject property sale in its calculations, since it is that sale price which it is trying to estimate. In other words, the model will estimate the value of each property using comparable sales information and other appropriate information, available prior to the actual sale of the property itself. A Sigma is to be assigned to each subject property. First, however, the variances or errors of the valuations done for each property must be computed.

As used herein, the term "variance" does not mean the statistical term for variance, which would be the square of the traditional standard deviation, but rather the term "variance" is used here to refer to the numerical or percentage error made in the valuation process. In the example presented above, if a property was valued at $520,000 but actually sold for $500,000, the error or variance made by the automated valuation model was +$20,000, or 4% in percentage terms. These variances, whether positive or negative, large or small in size or magnitude, are specific numbers. An individual number all by itself does not have a standard deviation or Sigma of any kind, since any kind of standard deviation is a property of a statistical distribution of more than one number.

The large data set is then divided into many subsets or slices which may be treated as reasonably homogeneous for location, price, quantity and quality of underlying supporting data used in the valuation, or any other identifiable characteristic or characteristics considered by the automated valuation model in valuing property. The properties themselves within a subset may have different features and may be geographically distant one from another but since the quality of the supporting data in a subset is similar, the expected accuracy of the automated valuation model is expected to be nearly the same for all the properties in a single subset.

The variances or errors in valuation for the collection of properties in a subset have a collective distribution. It is possible to calculate the mean, the median, and the traditional standard deviation of these errors. It is also possible to construct a Forecast Standard Deviation for the errors in this subset.

Then, for any future valuation request, the subject property is assigned to one of the subsets or slices that have been recently been built, according to its features, geographic location, the strength of its comparable sales set, and other characteristics. It is then assigned the Forecast Standard Deviation that had been built from that subset. Every future subject property that is assigned to this same subset receives the same assigned Forecast Standard Deviation. These are thus not individually calculated. However, because the present invention builds a system of potentially literally thousands of assigned Forecast Standard Deviations, a very close approximation to the ideal of full individual calculation is attained. Using the method of the present invention, it is reasonable to assign Sigmas with as many as four digits after the decimal point, hence 0.0832 or 8.32%. Since Sigma is now commonly declared by existing products with two digits after the decimal point, such as 0.09 or 9%, the present invention attains an approximation to the ideal that is in actual practice indistinguishable or almost indistinguishable from what would be done with full mathematical calculation. In the present embodiment, the table of assigned Sigmas may be rebuilt and tested every six months, although other intervals such as three months or one year are also possible.

The Forecast Standard Deviation, while similar in its formula, is not exactly the same as the traditional statistical standard deviation. A traditional standard deviation uses the mean or average of a set of numbers as its center. However, the Forecast Standard Deviation always takes zero as its center. If the mean of the set of numbers is zero, the two standard deviations are identical. But if the mean is above zero or below zero, hence the valuations tend to be higher or lower than the true values of the properties, then the Forecast Standard Deviation will be larger or wider than the traditional standard deviation.

To build an estimate of either standard deviation, the differences of each number from the center of the distribution, whether zero or the mean of the numbers, are squared. These squares are added together, and this sum is divided by N minus 1, where N is the total number of items. In the present invention, this number of items is the number of properties in the data set or subset. The square root of this quotient is the Forecast Standard Deviation or the traditional standard deviation.

A very simple example of this would be to consider the following numbers:

0.06
0.065
0.07
0.075
0.08
0.085
0.09
0.095
0.10

The mean of this distribution is 0.08 and its standard deviation around that mean is only 0.0137, or 1.37%. However, the Forecast Standard Deviation of this distribution measured around the zero point is 0.086, or 8.6%. Indeed, six out of nine or 66.7% of the numbers do lie within one Forecast Standard Deviation from zero. In this example, the Forecast Standard Deviation is much wider and thus worse than the traditional standard deviation of variances, because it must reflect the off-center nature of the distribution of variances.

The present invention provides a method of computing Forecast Standard Deviations upon subsets of the overall data set by dividing the overall set over and over again along the natural lines of the main attributes provided by the subject property's record information and by the automated valuation model when it values the property. For instance, each subject property can easily be assigned to its state, its county, and even its zip code should that be desired. Each property may be assigned to its "land use code" according to what type of property it is such as a house, condominium, or duplex. Each property may be assigned to an "economic tier" according to whether its valuation or price or other such indication of value is in the top half, top fourth, bottom fourth or other sub-tier of all the valuations in its state, county, or zip code. Other attributes may also be used to construct subsets such as property age or size. Furthermore, and sometimes more important, the automated valuation model itself assigns attributes to each valuation that are useful in defining the appropriate subsets.

One such example is the sub-division of "confidence score." This may take the form of an existing traditional "confidence score," or a "raw score," or some other form. It may be found in letter or numerical form. It may represent accuracy or it may be a "right tail" measure of risk and exposure in the event of default. Because most automated valuation models provide some indication of a confidence score as a representation of the trustworthiness of the valuation, these "tiers" of trustworthiness are very useful for breaking the aggregate group of properties into sub-divisions. A Sigma value may be calculated for each sub-division. It is very likely to be true that subsets built on superior confidence scores of any type will yield smaller, narrower Sigmas, associated with higher levels of accuracy in valuation, than will subsets built on inferior confidence scores.

To improve precision, subsets may be divided into ever smaller subsets. For instance, "tiers" based on confidence score levels of any type may themselves be divided up according to state, county, land use, value tier, or other attributes. This process of subdivision may continue through several stages; hence a very small sub-subset may be defined by value tier within land use within county within state within confidence score. In working with ever-smaller subsets, precision improves as the properties within smaller subsets are more likely to be homogeneous in their property and valuation attributes. On the other hand, the sample size or number of properties in a subset, decreases for smaller subsets, and finally reaches a low level at which a forecast standard deviation cannot be reliably computed because there is not enough data. In this situation, the sample size "N" has become too small. In the preferred embodiment, subsets are sliced and divided as long as N is large enough to retain accuracy; further slicing is not performed if it would result in an N so small as to sacrifice the accuracy of the Sigmas produced. But even with this methodology there typically are generated thousands of subsets, each possessing its own Sigma. Then, when a subject property is valued in the future, it is assigned the Sigma appropriate to the "attribute subset" to which it belongs.

The attributes such as confidence score, state, county, land use, or value tier used to define the hierarchical slicing and division of subsets may vary. Some attributes may be used and not others. Also, the order of the use of these attributes to divide subsets into smaller subsets may vary.

In the preferred embodiment, the attributes used and the order in which they are applied are chosen along the "natural lines" of the function of the automated valuation model itself. In general, the attribute which is the most productive and consistent in defining subsets with understandable Sigmas is used first. This may be a property attribute such as county or state or land use, or an automated valuation model attribute such as confidence score, raw score, or some other attribute. Confidence scores may be given in many forms: letter grades, numerical values and other forms are a few examples. In the preferred embodiment, the attribute that makes the greatest contribution is that of a "raw confidence score" or "raw score." Thus, the largest subsets are those simply defined according to raw score levels. Then, it was found that the most productive order was to divide by state, then by county, then by land use, and finally by market value tier. Thus, the methodology should follow the "natural lines" of the data set and of the automated valuation model.

The choice of which attributes to use, and the order of their use, in defining subsets, together with the minimum requirements on N in the low-level subsets, may vary. In particular, in building this product for an automated valuation model owned by a competitor or another outside firm, experimentation may be necessary to find the best choice of attributes to use and the best order in which to apply them. The "natural lines" of the data set or automated valuation model may vary from one automated valuation model to another.

Next, some validation of the proposed Sigma for each major sub-division, such as a state or county, across all levels of other attributes such as land use or raw score, takes place to further ensure a margin of safety with respect to accuracy. Thus, the valuation error for each property is computed in terms of Sigma units. For example, if the Sigma were 8.0% for a particular property, then 8.0% is one Sigma unit. If the valuation of that property was in fact 4.0% too high, this error in Sigma units would be (4.0%)/(8.0%) = +0.50. If the valuation was 4.0% too low, the error in Sigma units would be -0.50 or minus 0.50. An analogy to Sigma units in human terms would be to measure the height of each person in a city, not according to a standard inch or meter, but as a multiple of the size of the person's own foot. Each person would have a certain height in their own "foot units." A person 66 inches tall with a foot 12 inches long would be 66/12 = 5.5 "foot units tall."

For each state and each county, the squares of these errors measured in Sigma units are added up and divided by N-1 where N is the number of properties in that state or county. Taking the square root gives the validation number. In effect a new Forecast Standard Deviation is computed, measured in Sigma units, following geographic lines only, and with no respect to raw score, land use codes, or other attributes, and with no respect to the order of the use of these attributes in the "natural lines" development of Sigma. This is a simple high-level cross-check to see if Sigma has not been made too large or too small in all the slicing and definition.

A perfectly defined Sigma in every small subset would result in the county and state aggregate values each being a Forecast Standard Deviation of 1.00 as measured in Sigma units. In other words, Sigma would be exactly what it ought to be. If the forecast standard deviation in Sigma units was less than 1.00 measured in an entire county or state, this would also be acceptable, because it means that the derived Sigmas are more conservative than they could be. In actual practice, most of these county and state check-ups yield a Forecast Standard Deviation in Sigma units of exactly 1.00 or slightly lower. In a few cases the Forecast Standard Deviation in Sigma units is higher than 1.00. For example, a value of 1.05 means that in a specified county or state, the algorithm has built a set of Sigmas that are a little too small. If tested by a user, such as a lender, in the specified county or state, they would find that the actual errors are on the whole larger than the computed Sigmas would lead them to expect. In this example all Sigmas in this county or state are peremptorily multiplied by 1.05 to enlarge them and definitely produce a cross-checked Sigma known to be validated and acceptable. This modified Sigma becomes the Sigma that is actually returned to the user in future inquiries. This modified Sigma also becomes the basis for all future Sigma unit computations including those used in the derivation of a right tail confidence score and a responsive confidence score.

Next, using the Sigma units derived above, a right-tail confidence score may be derived. The right-tail confidence score is a measure of the automated valuation model's confidence that the valuation is no more than a certain percentage above the true value of the property. This percentage is often ten percent, but may be larger or smaller depending on the accuracy required. An example of a stand-alone method to derive the right-tail confidence score is described in the co-pending application 10/771,069 filed on February 3, 2004 and owned by the assignee of the present invention and incorporated herein by reference.

To derive this right-tail confidence score using the Sigma units developed above a table of percentiles in Sigma units is computed on a national basis. The desired right-tail cutoff level, such as ten percent, is divided by the Sigma size of each sub-division, to derive a right-tail confidence score for that sub-division by consulting the percentile table of valuation errors in Sigma units. The right-tail cutoff level is also known as the first overvaluation criterion which is a value set at a predetermined level of unacceptable excess valuation. As applied to a right-tail confidence score for any property in a sub-division, the right-tail confidence score indicates the confidence, represented as a probability, that the valuation is no more than the pre-determined percentage above the actual value. The right-tail confidence score is useful to lenders and other users of automated valuation information as a further indicator of accuracy. In particular, it helps to protect lender users from over-lending on a particular property and thus increasing their exposure to risk and loss.

As an example, suppose that the subdivision to which a subject property has been assigned has itself been assigned a Sigma of 0.1027 or 10.27%. In order to measure the risk that this valuation is or isn't more than 10% higher than the true value the right-tail cutoff is set at 10%. In this example, the 10% representing the right-tail cutoff is slightly less than one Sigma unit. In fact, a right-tail cutoff of 10% is (10%)/(10.27%) or 0.9736 Sigma units.

Suppose that in the percentile table of variances measured in Sigma units, a level of +0.9736 Sigma units corresponds to the 88th percentile. The definition of percentile means that 88% of the variances can be expected, on an overall basis, to be no more than 0.9736 Sigma units above zero. This corresponds to, with Sigma in this case assigned as 0.1027 or 10.27%, an 88% probability that the variance is no more than +0.10; i.e. an 88% probability that the valuation is no more than 10% above the true value of the subject property. So, a Sigma of 0.1027 corresponds to a right-tail confidence score of 88. The confidence score is the same as the percentile, from the definition of percentile. This relationship holds true for all different levels of Sigma and for right-tail cutoff levels that differ from 10%. The chosen right-tail cutoff level may be altered, though 10% has been determined to be the most useful indicator of accuracy while maintaining reliability as an indicator itself. Other right-tail confidence scores may be calculated using the method of this invention using different cutoff levels, such as +0.12 or +0.15. These examples and other larger numbers would provide confidence scores that represent probabilities that the automated valuation model's valuation is, respectively, no more than 12% or 15% higher than the true value. Smaller cutoff levels, such as +0.08, would lead to confidence scores that represent the probability that the valuation is no more than 8% greater than the true value. Other cutoff levels may be used, but would not be very useful as indicators of valuation credibility.

Also, using the method of this invention, a responsive confidence score may also be generated. A responsive confidence score is a confidence score generated in response to a value provided by a user. A method of computing a responsive confidence score is disclosed in the co-pending application 10/771,069 filed on February 3, 2004 entitled Responsive Confidence Scoring Method for a Proposed Valuation of a Property that is owned by the assignee of the present invention and whose contents are incorporated herein by reference. In the typical example, a user will input a value for a particular property. An example of such a situation would be when in a real estate agreement, where a contract is entered into by a buyer and seller, subject to the buyer receiving a loan to purchase the property. The buyer then submits a loan application to a lender based on the agreed upon purchase price. The responsive confidence score method provides the lender with a confidence score based on the agreed upon purchase price of the property, which may not necessarily correspond to the automated valuation model's valuation of the property. A responsive confidence score will be returned which is essentially a confidence score based on the value provided by the user. This is different than the usual automated valuation model valuation which values a property as closely as possible and returns a confidence score corresponding to that valuation. Here, the confidence score is tailored to the input value supplied by a user, rather than the valuation supplied by the automated valuation model. Using equations, percentile tables and, if necessary, linear interpolation, a confidence score can be generated in response to user input.

Further features and advantages of the present invention will be appreciated by reviewing the following detailed description of the invention, and the accompanying drawings, of which: -

Figure 1 is a schematic representation of a preferred embodiment of the data structure used to implement the method of the invention;
Figure 2 is a flowchart according to the preferred embodiment depicting the steps involved in generating Sigma values;
Figure 3a is an example of a standard deviation by state table;
Figure 3b is an example of a standard deviation by land use table;
Figure 3c is an example of a standard deviation by valuation tier table;
Figure 3d is an example of a standard deviation by raw score table;
Figure 3e is an example of a Sigma by raw score graph, based on the data within Figure 3d;
Figure 4 is an example of a representative, partial raw score by state Sigma table, within the fixed raw score level of 80;

Figure 5 is an example of a raw score by state Sigma table, where the state is fixed at California and then the subsets within California defined by individual raw score levels are examined;

Figure 6 is an example of a representative, partial raw score by state by county Sigma table wherein the raw score level is fixed at 80 and the state fixed at California;

Figure 7 is a an example of raw score by state by county Sigma table wherein the county is fixed to be Orange County, California, and subsets defined by all possible raw score levels are examined;

Figure 8 is an example of a flowchart depicting the steps involved in validating a trial Sigma;

Figure 9 is an example of a national Sigma percentile table;

Figure 10 is an example of a national percentile table of valuation variances measured in Sigma units;

Figure 11 is a schematic flowchart depicting the steps involved in generating a right-tail confidence score in accordance with an aspect of the present invention;

Figure 12 is an example of a percentile-Sigma correspondence lookup table;

Figure 13 is a schematic flowchart of the steps involved in generating a responsive confidence score in accordance with an aspect of the present invention.

The present invention provides a method of calculating a forecast standard deviation or Sigma for a particular property valuation given by an automated valuation model. The invention also describes how to use the generated Sigmas to create right-tail confidence scores and responsive confidence scores based upon the generated Sigmas.

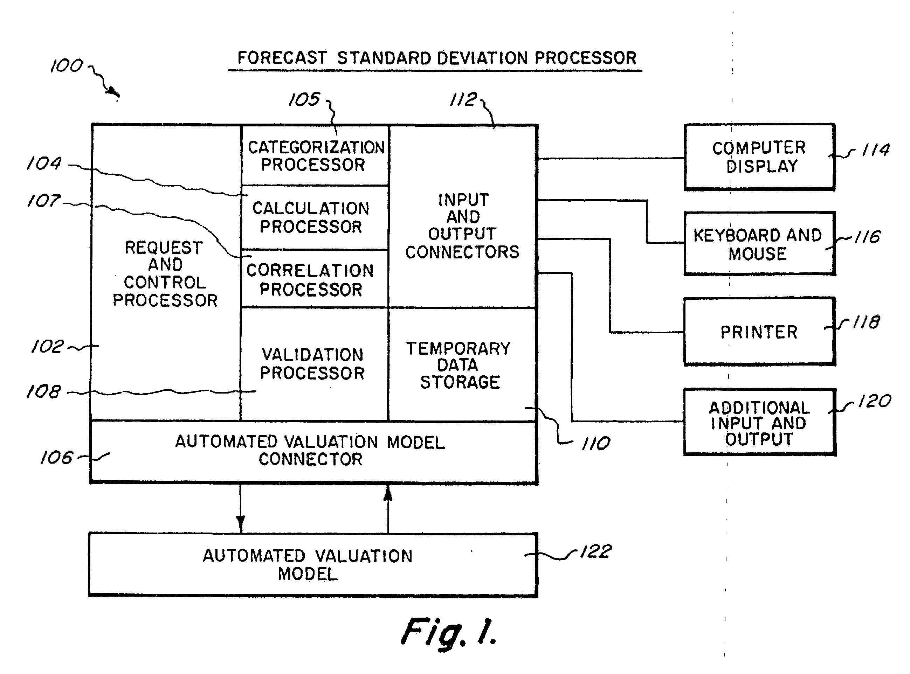

Referring first to Figure 1, an example data structure for a computer-based implementation of a forecast standard deviation processor 100 is depicted. The forecast standard deviation for an automated valuation of a target property is also referred to as a Sigma. This data structure is only an example data structure. Many other data structures could be chosen, not including many or some of the elements depicted herein. The steps performed by any or all of the elements of the forecast standard deviation processor may be performed by a person.

The request and control processor 102 is used to handle requests made by the user, for example, for a responsive confidence score. Some data input acceptance processing may take place in order to accept data concerning a particular property for use in generating a responsive confidence score for that particular property. The request and control processor 102 acts as an intermediary between a user making that request and the computer doing the calculations relating to that request. Additionally, the request and control processor 102 controls the flow of information between the various components of the forecast standard deviation processor 100 and begins and controls each process within the forecast standard deviation processor. The calculation processor 104 is another element of the data structure. In this element, the calculations related to formulating a Sigma, right-tail confidence score and a responsive confidence score are performed. The categorization processor 105 is connected to and operates in conjunction with the calculation processor 104 and conducts the categorization steps of the present invention. The correlation processor 107 is also connected to and operates in conjunction with the calculation processor 104. The correlation processor 107 performs the correlation steps related to formulating Sigmas, right-tail confidence scores and responsive confidence scores. Computer code, hardware or software, are designed to perform the necessary algorithms. The automated valuation model connector 106 is used by the forecast standard deviation processor 100 to communicate with one or more automated valuation models. This communication may be necessary to request valuations from the automated valuation model 122, for example, in the generation of a responsive confidence score. The specific algorithms and formulas used by the automated valuation model 122 in computing valuations is not an element of the forecast standard deviation processor 100. In fact, the forecast standard deviation processor is designed to run separately from the inner workings of any particular automated valuation model 122. This is one of the benefits of the present invention.

The validation processor 108 is an additional element of the forecast standard deviation processor 100. The validation processor 108 is designed to use computer code in hardware or software that will validate the trial Sigmas produced in a preliminary data evaluation. The validation processor is designed to implement code to ensure and correct errors, overvaluations and especially undervaluations of the trial Sigmas. Temporary data storage 110 is where data being worked upon by the forecast standard deviation processor will be stored. Commonly, this is implemented through the use of portions of random access memory (RAM) allocated to running programs on computers by the operating system implementation of the computer. This invention may also be implemented using a hardware-based solution, providing a portion or all of a data memory location to be used in performing calculations.

The input and output connectors 112 control the flow of information into and out of the forecast standard deviation processor 100. The input and output connectors 112 maintain multiple connections to various data input and output devices. Example devices include: a computer display 114, a keyboard and mouse 116, a printer 118 and additional input and output 120. There may be many more different devices connected to the input and output connectors 112. Alternatively, only a subset of these devices may be connected.

This forecast standard deviation processor 100 is only an example data structure and flow-of-control for the generation of a forecast standard deviation or Sigma. Many other data structures and flow-of-control types could be implemented, including a person doing some or all of the individual steps of calculating the Forecast Standard Deviation of this invention. There may be many other implementations of software that perform some or all of the functions described herein which do not contain some or any of the described example forecast standard deviation processor 100 in Figure 1.

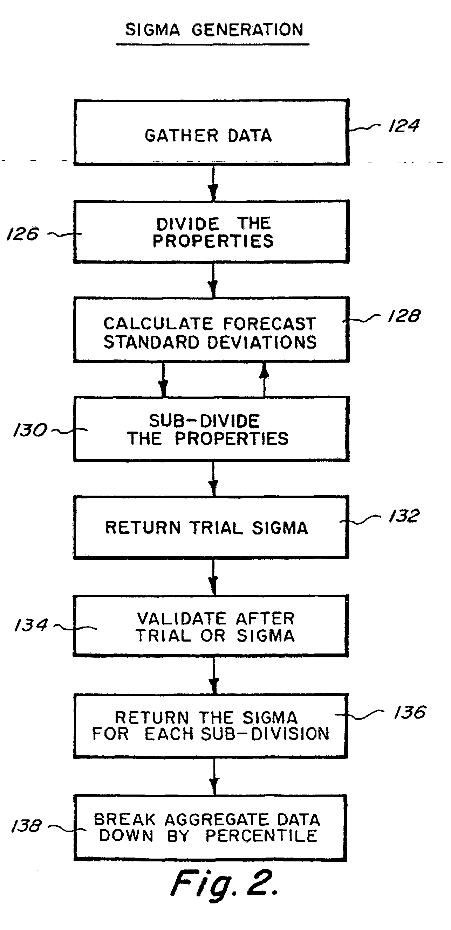

Referring next to Figures 2, a flowchart of the steps in generating a Sigma is depicted. The first step is to gather and prepare relevant data 124. In this step, the automated valuations of all properties relevant to the Sigma generation are gathered, along with the related confidence scores. The most relevant data are "reference values." Reference values are sales prices and appraisal values that have taken place subsequent to the automated valuation model's valuation of the property. Other relevant data may include the type of property, the county of the property, and the state of the property, and other characteristics. The "outliers," properties that were valued inordinately high or inordinately low in comparison to their actual sale prices, may be removed or corrected. Records may also be edited to properly reflect data entry errors in the automated valuation model properties, such as when a sale value of a property is missing a zero or has an additional zero. Errors in the "type" of property may also be corrected at this point, if that element is to be used in subsequent steps of subdivision. The result of this step is that the forecast standard deviation processor 100 (See Figure 1) is provided with a valid data set. This step may take place within the validation processor 108, once the data is gathered by means of the automated valuation model connector 106.

The next step in the process of generating a Sigma for each property is to divide the properties 126. In the preferred embodiment, this "division" of the properties is first done according to the "raw" confidence score provided by the automated valuation model 122 along with the valuation. Most automated valuation models have some implementation of a confidence score as an indication of the accuracy of the valuation or of the probability that the valuation is very close to the actual value of the property. Whatever means the particular automated valuation model for which Sigmas are being derived uses to describe the accuracy in relation to other valuations by the same automated valuation model may be used as the first division. However, in alternative embodiments of the invention, many other divisions of the property set may be used. Examples of relevant factors which could become the first division include: a raw score for the properties, the properties' state, the properties' county, the properties' type, or the properties' economic tier. Depending on the data provided by the automated valuation model along with its valuation concerning each property, other data divisions may be used.

Once the first division of the properties into groups has taken place the next step begins. The next step is to calculate a forecast standard deviation 128 for the properties in each raw score or confidence score level. If a different division is chosen such as property type, county or economic tier, then the forecast standard deviation is calculated based upon the division chosen. In the preferred embodiment, a raw confidence score or confidence score is used.

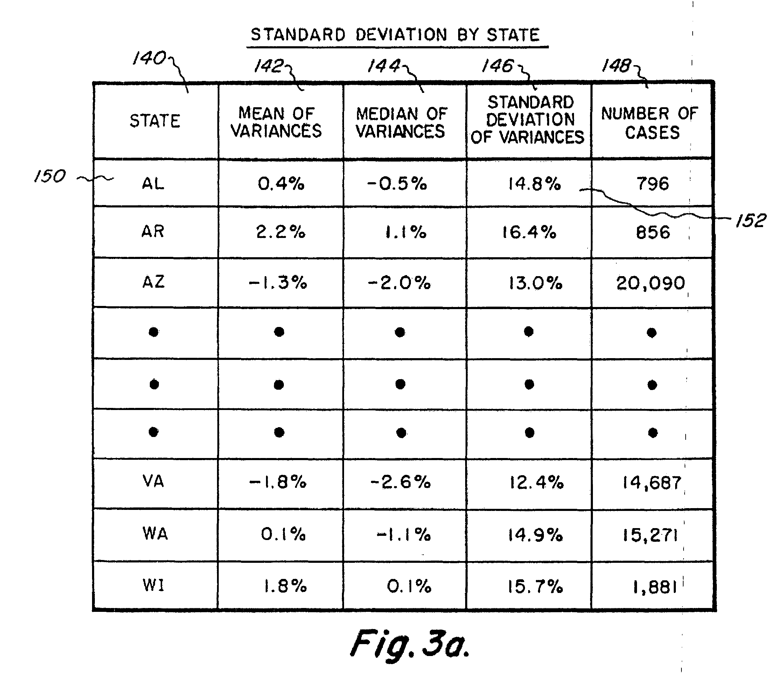

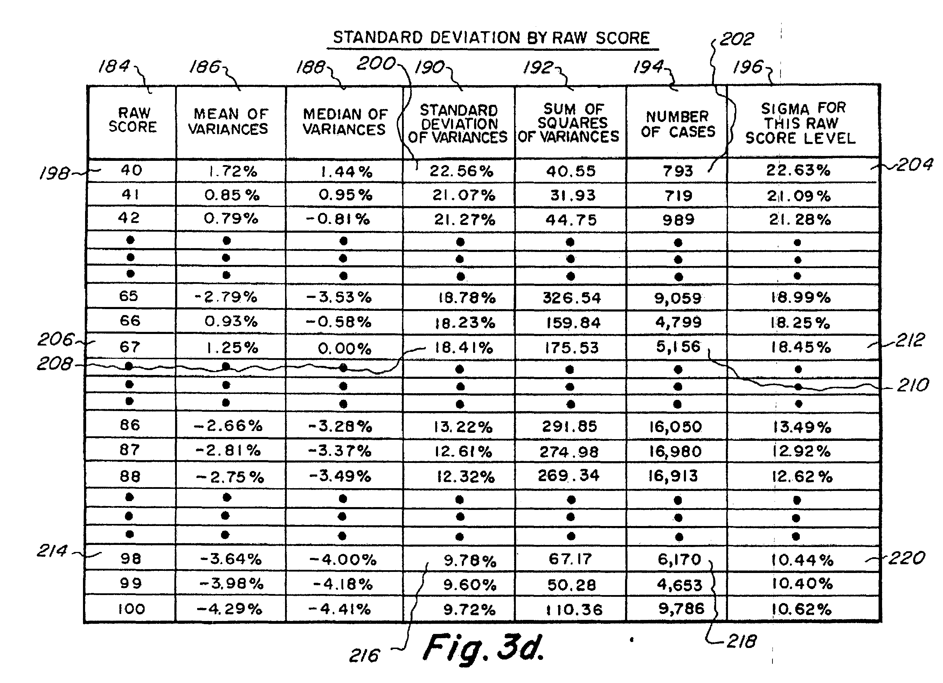

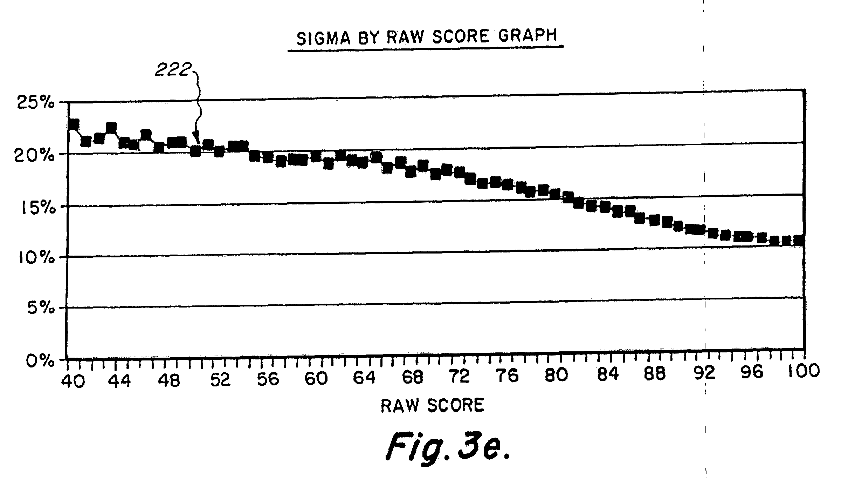

The reason that raw score or confidence score is chosen in the preferred embodiment may be more clearly demonstrated by Figures 3a-e. These figures depict the relationship between standard deviations and various first divisions. In Figure 3a, a standard deviation by state table is depicted. There are columns corresponding to the state 140, the mean of the variances 142, the median of the variances 144, the standard deviation of variances 146 and the number of cases 148. AL in element 150 corresponds to the state of Alabama. Its standard deviation of the variances 152 is 14.8%. As compared with the several other states depicted, little difference is apparent. This is an indication that a first division by state will not rapidly increase the accuracy of the standard deviations or the forecast standard deviations. The same table could be created based on counties. Even at this low a level, no readily apparent indicator of increasing or decreasing accuracy is apparent.

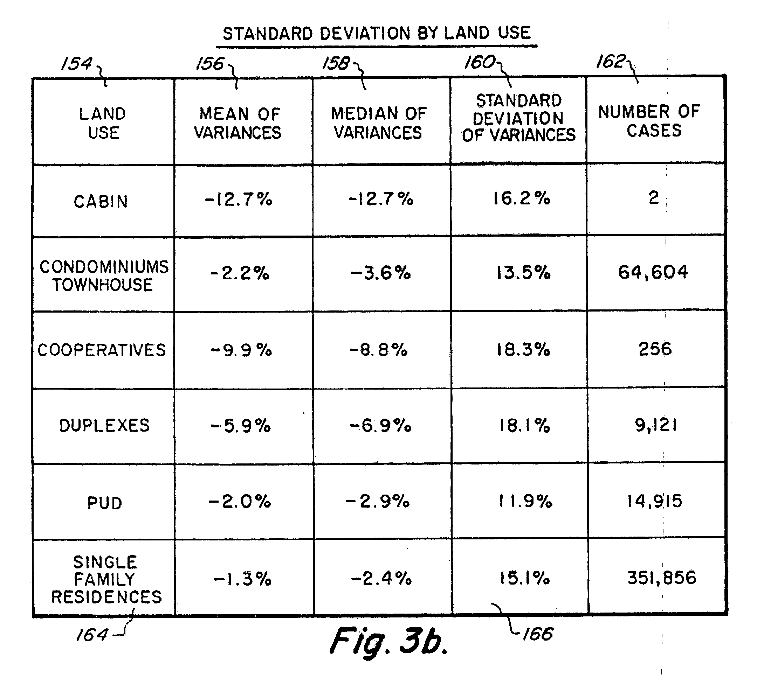

Figure 3b depicts the effect of the land use on the standard deviation. The first column corresponds to the land use 154. Again, there are columns corresponding to mean of variances 156, median of variances 158, standard deviation of variances 160, and the number of cases 162. Single family residences, at the bottom of this table, have a standard deviation of 15.1% depicted in element 166. Again, when compared with the standard deviations of the other land use types, there is not a drastically noticeable difference.

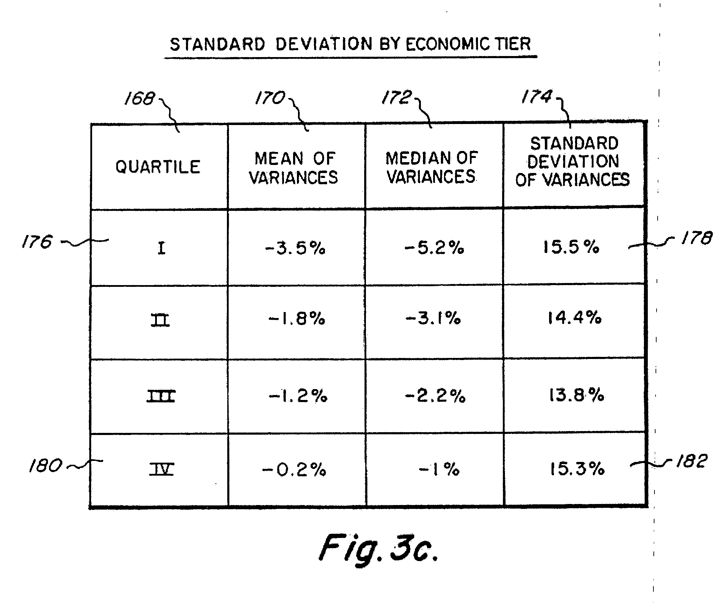

Figure 3c depicts the standard deviation by economic tier. Each of the quartile 168 column corresponds to the bottom 25%, middle-bottom 25%, middle-top 25% and top 25% of home valuations. These are based upon their valuation in relation to homes in their immediate vicinity, not on a national economic tier basis. Actual price comparisons across states or nations do not translate well into actual data. Home prices and valuations vary widely from city to city or from city to rural areas and even within cities. A price or valuation that is very low for a home, and thus a likely home of lower quality, in an affluent neighborhood would be in the upper economic tier of homes in a less affluent neighborhood. Again, there are columns for mean of variances 170, median of variances 172 and the standard deviation of variances 174. In quartile I 176 which represents the lowest economic quartile, the standard deviation is 15.5%, depicted in element 178. In quartile IV 180, which represents the highest economic quartile, the standard deviation is 15.3%, depicted in element 182. Again, there is little change dependent upon economic tier quartiles. The economic tier need not be assigned according to quartiles. Any other significant grouping of properties by an economic tier is acceptable, so long as a sufficient number of properties remain in the economic tier such that it remains a viable sub-division for purposes of calculating a Sigma. In the preferred embodiment, quartiles are the economic tier divisions.

Next referring to Figure 3d, a table of standard deviations of variances by raw score is depicted. This raw score is a score based on the level of confidence or of the accuracy of the valuations of properties in the raw score level. In the preferred embodiment, it is based on the quality and quantity of comparable sales information and other information that is used in generating the automated valuation. A high raw score represents a high probability that the automated valuation model valuation of the property is close to the true value. Correspondingly, a lower raw score represents a lower probability that the automated valuation model valuation is close to the true value. In the preferred embodiment, the raw score is an unvalidated and unfinalized version of a confidence score. In the validated and finalized confidence score ("confidence score") of the preferred embodiment, the values are limited to between 65 and 92. This is done because for confidence scores below 65, there is a fairly low confidence in the valuation and thus the valuation itself is likely a fairly poor estimate of actual value. Additionally, confidence scores over 92 begin to imply certainty. Because automated valuations are only estimates though based on tested and refined mathematics, certainty is intentionally never implied.

The columns depicted in the table depicted in Figure 3d are raw score 184, mean of variances 186, median of variances 188, standard deviation of variances 190, sum of squares of variances 192, number of cases 194 and Sigma for this raw score level 196. For a raw score of 40, depicted in element 198, the standard deviation is 22.56% in element 200 and with a Sigma of 22.63% in element 204. Compare this to the raw score of 67, depicted in element 206, with a standard deviation of 18.41% in element 208 and a Sigma of 18.45% in element 212. Also compare these with the raw score of 98, depicted in element 214, with a standard deviation of 9.78% in element 216 and a Sigma of 10.44% depicted in element 220. Also, compare the number of cases for each in elements 202, 210 and 218.

There is a direct and strongly correlating relationship between raw score and the resulting Sigma for each raw score level. The number of cases is widely varying, having little or no apparent difference in the direct relationship between raw score and the resulting Sigma. This direct relationship is further depicted in Figure 3e, by the graph of the data contained in Figure 3d. Line 222 demonstrates the downward trend, toward more accurate valuations and smaller Sigmas, as the raw score increases. Therefore, raw score or a similar or related confidence score are the preferred first division in the method of this invention, in the preferred embodiment.

The standard deviation is a common measure of the average of the variances of an estimate. For valuations, one standard deviation would be calculated from the mean of the variances. One standard deviation, measured above and below the mean, would include approximately 68.3% of the valuation variances in the case of a classical bell-shaped "normal curve." In such a case, there is approximately 68.3% probability that any given valuation variance is within one standard deviation of the mean of the variances. Roughly 95% of valuation variances are within two normal standard deviations from their mean.

Then, the difference between each individual variance and the mean of the variances is squared. These squares are summed and then divided by the number of valuations minus one. The square root of this sum constitutes the appropriate standard deviation. When calculating standard deviations for the method of this invention the individual variances are expressed as a percentage difference, not a numerical difference, thus producing a percentage standard deviation, not a numerical one. Please see the equations depicted below:

$$\text{Individual Valuation Variances} = v = (x - p)/p$$

$$\text{Mean of Individual Valuation Variances} = m = \{\textstyle\sum[(x-p)/p]\}/n$$

$$= \{\textstyle\sum v\}/n$$

$$\text{Difference of Individual Valuation Variances from Their}$$

$$\text{Mean} = v - m$$

$$\text{Sum of Squared Differences} = \textstyle\sum[(v - m)^2]$$

$$\text{Sum of Squared Differences, Averaged} = [\textstyle\sum(v - m)^2]/(n-1)$$

$$\text{Standard Deviation} = \sqrt{\{[\textstyle\sum(v - m)^2]/(n-1)\}}$$

Where

x is an individual valuation computed using an automated valuation model;

p is the sale price or other measure of "true value;"

v is the individual valuation variance, m is the mean of the individual valuation variances; and

n is the number of valuations for which the standard deviation is being created.

The $\Sigma$ is the mathematical symbol for "the summation of" which means that each of the values given by the items within the brackets are added together. "Standard deviation" herein refers to the traditional standard deviation.

In the present invention, the Forecast Standard Deviation is not calculated around a mean. Instead, the forecast standard deviation is calculated around the zero level. A zero variance indicates that the valuation generated by the automated valuation model is the same as the actual sale price or appraisal value for a property. As above, in the preferred embodiment, when calculating forecast standard deviations for the method of this invention the individual variances are expressed as a percentage difference, not a numerical difference, thus producing a percentage Forecast Standard Deviation, not a numerical one. Thus, the Forecast Standard Deviation is a measure of the spread or standard deviation of valuations around the individual reference values (usually sale prices). It is a measure of the standard deviation of valuation variances around the ideal zero point, not around the possibly off-center mean of those variances. The equations are the same, except that zero is used in place of the mean "m" of valuation variances:

$$\text{Individual Valuation Variances} = v = (x - p)/p$$

$$\text{Difference of Individual Valuation Variances from Zero} = v - 0 = v$$

$$\text{Sum of Squared Differences} = \textstyle\sum[(v - 0)^2]$$

$$\text{Sum of Squared Differences, Averaged} = [\textstyle\sum(v - 0)^2]/(n-1)$$

$$\text{Forecast Standard Deviation} = \sqrt{\{[\textstyle\sum(v - 0)^2]/(n-1)\}}$$

Where

x is an individual valuation computed using an automated valuation model;

p is the sale price or other measure of "true value;"

v is the individual valuation variance; and

n is the number of valuations for which the standard deviation is being created.

The term "variance" herein means the percentage difference of the automated model valuation of a property with respect to the sale price or appraised value of that property, not the classical statistical definition of "variance."

In the ideal case, the distribution of valuation variances would be centered around zero, with a mean of zero: the automated valuation model would have no general tendency to value too high or too low. Individual valuations would be high or low, but the overall collective tendency would be "on target." In such a case the Forecast Standard Deviation would be the same as the traditional standard deviation. However, in many real-world situations, especially in very strong or very weak markets, the automated valuations may lag slightly behind or slightly overshoot prices, thus making the mean of the distribution of valuation variances below or above zero. In turn, this makes the forecast standard deviation larger or wider than the traditional standard deviation, because the distribution of valuation variances is off-center, either to the left or to the right of zero. "Forecast Standard Deviation" or "Sigma" as used herein refers to the method of this invention, calculating an expected standard deviation of valuation variances based "around" a desirable zero point rather than "around" their own, possibly off-center, mean.

The Forecast Standard Deviation is therefore useful as an indicator of how closely grouped the valuations in a given division or sub-division are to the actual sales prices. In many respects, this number is more valuable than a confidence score, because the Sigmas provided by automated valuation models may be compared to each other and may also be reviewed at a later time to see if they have proven themselves statistically accurate. Sigmas are, therefore, very useful to users of automated valuation models to enable them to further gauge the accuracy of the various automated valuation models being used or considered for use in their lending.

The Forecast Standard Deviation can be applied to forecast the standard deviations for valuations given in a geographic area, raw score level, economic tier, land use type, or other means of separating properties using some characteristic. The method of this invention creates a Forecast Standard Deviation, which is not a standard deviation based on immediately current data, but merely a projection into the future of past data to create a likely future standard deviation for use by the lender in evaluating the accuracy of valuations provided by the automated valuation model.

An advantage of the present invention over the prior art is that it can be applied to any automated valuation model without an understanding of the underlying mathematical and algorithmic architecture. The method of this invention is completely separate from an individual automated valuation model's methods. Using the method of this invention, a forecast standard deviation may be created for any automated valuation model. To apply the method of this invention all that is necessary is the publicly-available data set of sold properties and any available appraisals to be used as reference values and the automated valuation model valuations of the automated valuation model to be tested for those same reference values. Therefore, the method of this invention may be applied to any automated valuation model without reference to the internal mathematical and algorithmic architecture.

The next step in creating a forecast standard deviation is to further sub-divide the properties 130. In the preferred embodiment, the properties are subdivided as many times as possible to receive as closely tailored results as possible. However, in alternative embodiments of the invention, there may be no further sub-division or only one additional sub-division performed. Multiple sub-division is preferred in order to receive more accurate and closely tailored results. In this way, forecast standard deviations can be constructed upon finely detailed and subdivided subsets of the overall data set, making it possible to assign carefully tailored forecast standard deviations to future valuation requests. Literally thousands of possible forecast standard deviations, based on thousands of small and carefully defined subsets of properties, may be constructed and then assigned to future valuation requests for properties with characteristics belonging to the appropriate subset or subsets. In the preferred embodiment, the process of subdividing only continues so long as the data set is of sufficient size to produce results that are understandable and accurate.

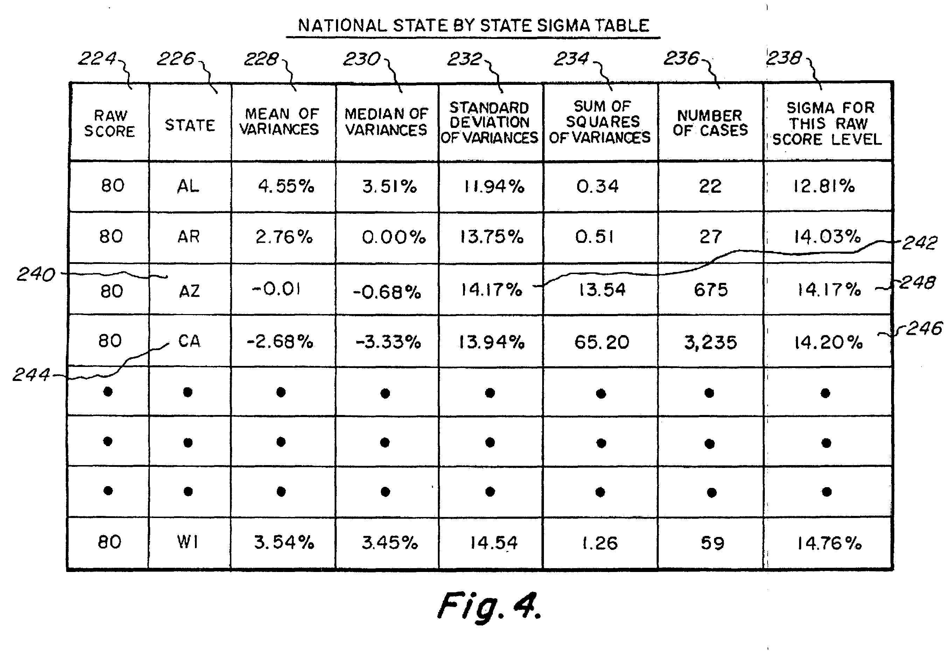

The first sub-division in the preferred embodiment is a state-by-state division within each raw or confidence score level. A different first sub-division could be chosen, but this has been shown to bear the most dramatic correspondence to differing Sigma values once the first division has taken place. This is largely due to the differences in real-estate markets from state to state. Other embodiments may use alternative subdivisions. Referring to the example using this sub-division depicted in Figure 4, the raw score 224, the state 226, the mean of variances 228, median of variances 230, standard deviation of variances 234, sum of the squares of variances 234, the number of cases 236, and Sigma for this state subset of the national raw score level of 80, depicted in element 238, are shown. Similar tables for each level of raw score, confidence score, or similar accuracy rating may be made. For example, the same table may be created using a raw score of 81 or a raw score of 82 and so on.

For each level of accuracy indication or confidence scoring provided by the particular automated valuation model that a Sigma is being created for, an entirely new table, depicting each state at that confidence indicator level, could be created, even if the form of confidence score delivery was quite different. For example, an alternative confidence score may be given in letter-grades, such that "A" is a high confidence indicator and "F" is a low confidence indicator. For such an automated valuation model, tables such as this one could be created for each of "A," "B," "C," "D" and "F." Finer grained raw scores or other confidence indicators are preferred because they will generate finer-grained results. In the preferred embodiment, Sigma results were first generated for raw scores of forty to one hundred, thus providing sixty-one levels of Sigma. Within each raw score there are as many sub-groups as there are states being studied. Calculating Sigma separately upon each sub-group results in thousands of possible Sigmas, each belonging to a particular sub-group.

For the raw score of 80, and the state of Arizona, depicted in element 240, the Sigma as calculated using the above-referenced forecast standard deviation formula is 14.17%, depicted in element 242. For California 244, the Sigma is 14.20%, depicted in element 246. Using this information, a lender could determine that at a raw score of 80 in the state of California, approximately 68.3% of valuations given by the automated valuation model for which the Sigma was generated are within 14.20% of the reference values, actual sale prices or appraisals. Similarly, a user could tell that in the state of Arizona at a raw score of 80 that approximately 68.3% of the valuations given by the automated valuation model for which the Sigma was generated are within 14.17% of the reference values.

In order to sub-divide, as depicted in Figure 4, and to perform subsequent sub-divisions, a certain number of cases should be present in order to ensure accurate Sigma generation. If the required number is not present, the calculated Sigma is not used and for that sub-division, all Sigmas are referred to the immediately higher-level division. In the preferred embodiment, the required number of cases is one hundred. Other numbers of cases could be used, though a minimum of one hundred has been found to provide the most accurate Sigma while retaining the virtues of finely-grained Sigma values most directly related to the properties to which they are applied. Using the preferred embodiment, the Sigma produced for Wisconsin at a raw score level of 80 would not be accurate enough to rely upon, because there are only 59 valuations in that sub-division.

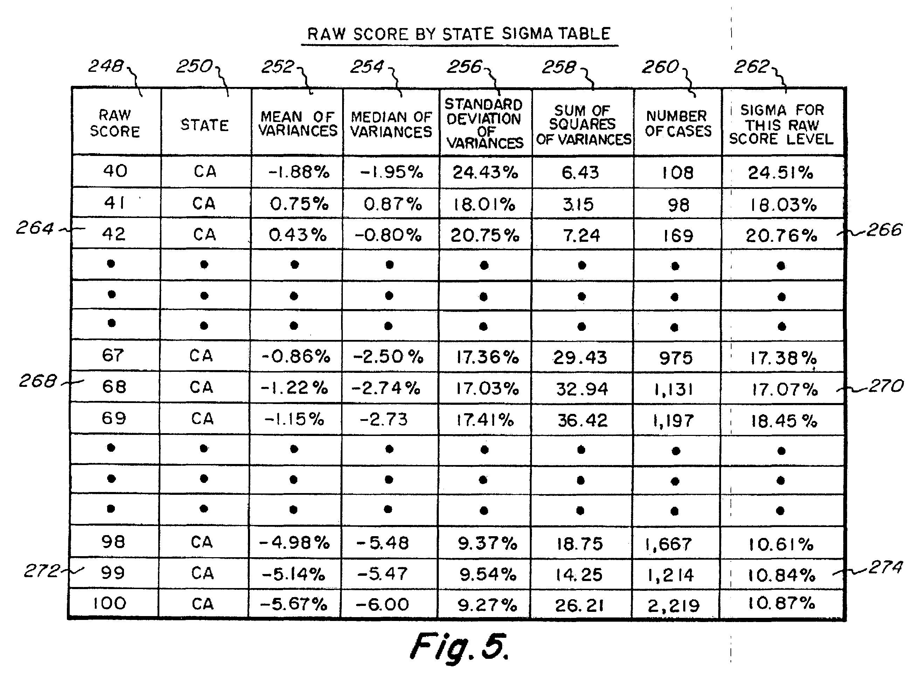

Referring next to Figures 2 and 5, a raw score by state Sigma table is depicted. This is the same information as before, but depicted in a different order. In this example, each state is further sub-divided by each raw score in each state, thus producing another level of sub-division with multiple groups within it. The more sub-divisions and the more these sub-divisions divide the data into groups, the more accurate, per property, the Sigma values given will be for each property. The columns in the table in Figure 5 are the same as those in the table in Figure 4. The columns represent raw score 248, state 250, mean of variances 252, median of variances 254, standard deviation of variances 256, summation of squares of variances 258, the number of cases 260, Sigma for this raw score level 262. The variable column in this table is the column representing raw score 248. Each of the items in the state 250 column in this representative raw score by state Sigma table is California. Alternative, but similar tables are created for each state or area for which sufficient data is available. Using this table, a user could tell how closely-grouped valuations are around the properties' actual sale prices. For example, at a raw score, a raw confidence score prior to validation, of 42, depicted in element 264, the Sigma in California would be 20.76%, depicted in element 266. The Sigma percentages in this table sharply decrease, indicating more accuracy, as the raw score grows. At a raw score of 68, depicted in element 268, the Sigma is 17.07%, depicted in element 270. However, at a raw score of 99, depicted in element 272, the Sigma is 10.84%, depicted in element 274. This represents that within California, at a raw score of 99, any valuation given has approximately a 68.3% chance of falling within plus or minus 10.84% from the property's reference values. As can be seen in Figure 5, the Sigma accuracy increased appreciably as the raw score increases. The data in this table could be applied to assign every property in a given raw score level within a state with a forecast standard deviation. However, to achieve a more accurate Sigma, further sub-division should take place.

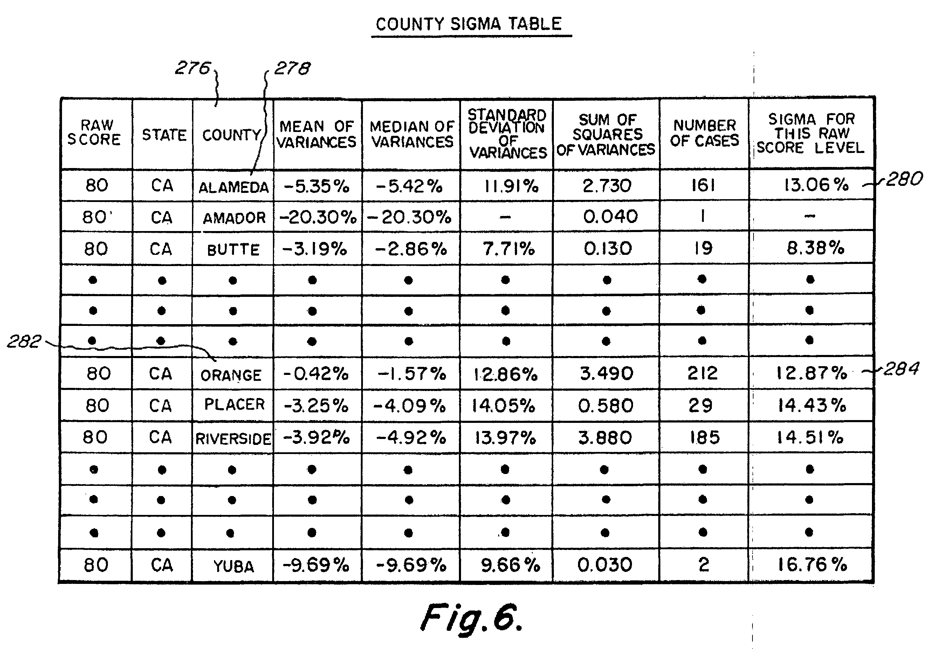

Referring next to Figure 6, a county Sigma table is depicted. This table is created as a continuation of the subdivision 130 (from Figure 2) for each of the raw scores depicted in a table like that of Figure 5. So, for each raw score level, for each county, a table like this in Figure 6, which is created for a raw score level of 80, is created. The columns are similar, only including one new column, that for county 276. Similar tables could be created for raw scores of 60 or of 99. In alternative embodiments, raw scores may not be used. Confidence scores, either numerical, percentile or as "grades" of the accuracy of the valuation may be used in place of raw scores. In another alternative embodiment, confidence scores may not be used at all. Other criteria such as state or land use may be used exclusively in the process of subdivision. In the preferred embodiment, raw scores are used. Here, for a raw score of 80 in the county of Alameda 278, the Sigma is 13.06%, depicted in element 280. For Orange County 282 the Sigma is 12.87%, depicted in element 284.

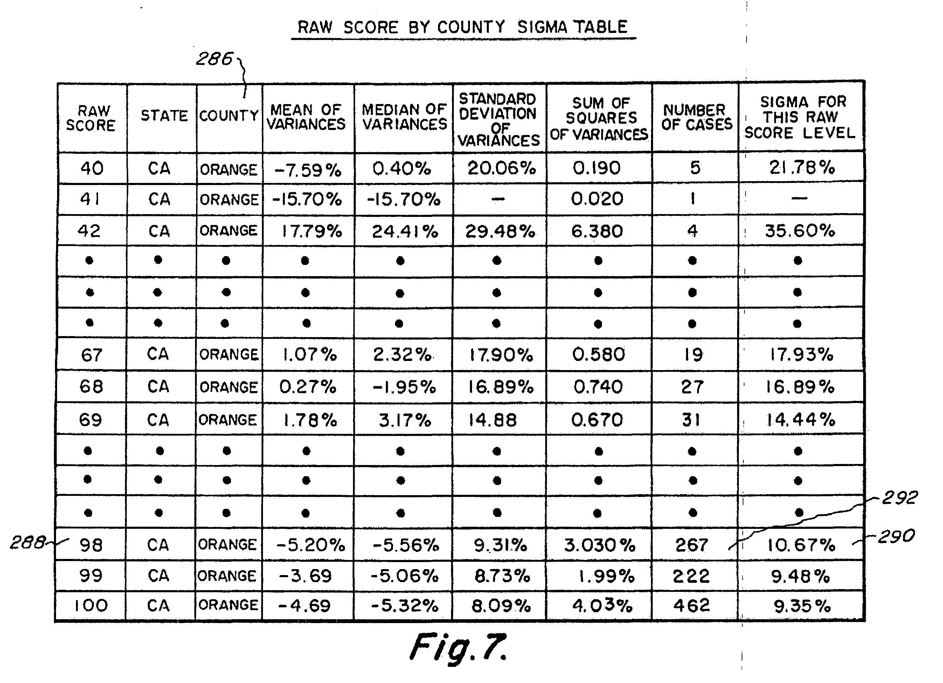

Referring next to Figure 7, a raw score by county Sigma table is depicted. This presents the same information presented for only one county, but in every raw score level. This table is very similar to the table depicted in Figure 5 with the added column for county 286. Similarly, a table for each county in a given area could be created like this table, to further sub-divide each of the counties in a given area by raw score. For example, in a raw score of 98, depicted in element 288, in Orange County, California the Sigma is 10.67%, depicted in element 290. This represents that for homes in Orange County, California with raw scores of 98, of which there were only 267 sold during the time period under study, depicted in element 292, the forecast standard deviation will be 10.67%. Again, this means that approximately 68.3% of the valuations given by this automated valuation model may be expected to be within 10.67% of the reference value at that raw confidence score level, within Orange County, California. This forecast standard deviation would then be assigned to all properties valued in the future in Orange County, California, that had raw scores of 98.

Further levels of sub-division may occur, using any recognizable characteristic of property that may be used to distinguish one group of properties from another. Other subdivisions could include the economic tier or property land use. These sub-divisions may take place in any order, though the order of the preferred embodiment depicted here is to use raw score, state, county, land use, and then economic tier.

In the preferred embodiment of the invention, economic tier refers to a valuation percentile tier. Valuations may be divided into any number of tiers based upon what percentage of the particular market they hold. For example, when dividing properties into four tiers based upon the valuations, automated or otherwise, for properties in a particular sub-division, properties valued at or above the 75th percentile, would be in the highest valuation tier. Properties valued in the 50th percentile to 75th percentile range would be in the second highest valuation tier. Properties valued below the 50th percentile down to the 25th percentile would be in the third valuation tier and the remaining properties would be in the lowest valuation tier. In other embodiments, the economic tier may be a price tier, where the division takes place using actual sale prices. An example of such an economic tier division is depicted in Figure 3c. The economic division may take place using alternative methods of determining a value of a property at a given time in relation to other properties. In the preferred embodiment, four economic tiers are used. In alternative embodiments, more or fewer tiers may be used.

In the preferred embodiment, economic tier is understood as taken not on a national basis, but within the higher subdivisions such as raw score, state, county, and land use. In alternative embodiments, for example, if the economic tier were chosen first or second as a sub-division, then the economic tier could be within an entire nation or state. The number of subdivisions in the preferred embodiment is as many as possible while maintaining accuracy of the Sigma values returned. Once the sub-divisions have taken place, the trial Sigma for each sub-division is returned 132 (see Figure 2). These trial Sigmas are returned in the preferred embodiment only for sub-divisions with greater than one hundred cases. This number may be higher or lower in alternative embodiments. Numerous trial Sigmas are returned for validation.

Referring again to Figure 2, once the trial Sigma values for each sub-division are returned they must be validated 134. In this step of the process, the trial Sigmas are tested to ensure that they are accurate estimations of future Sigmas, and that no unrealistically low Sigma has arisen in the process of shuffling and subdividing, so that they will be useful indicators of the accuracy of a valuation. The testing takes place within the functional portion of the forecast standard deviation processor 100 called the validation processor 108 using temporary data storage 110 (see Figure 1).

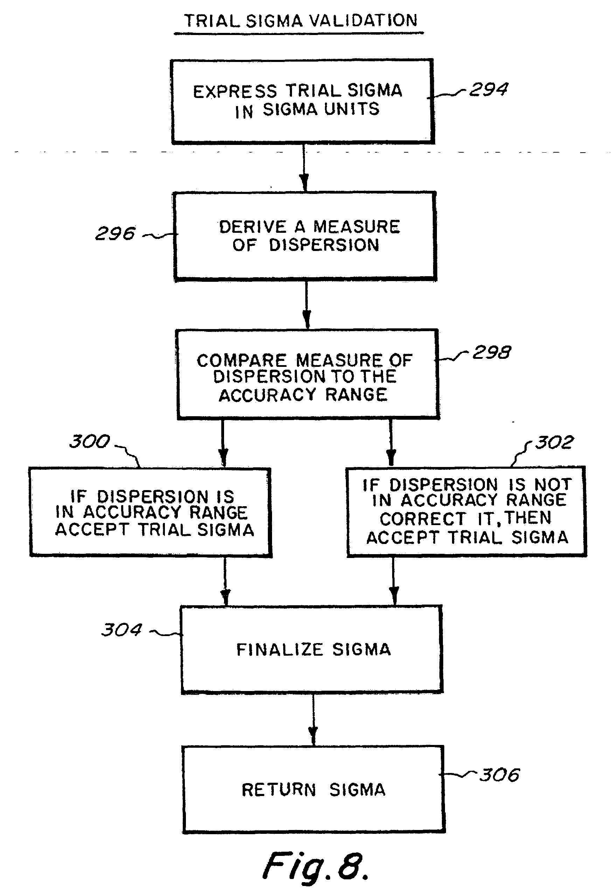

Referring now to Figure 8, the steps to validate a given trial Sigma are depicted. The first step is to express each valuation variance in terms of Sigma units 294. Take the individual valuation variance associated with the valuation of each property, and divide it by the trial Sigma assigned to that property valuation which is the trial Sigma belonging to the sub-division in which the property is assigned. That is, each variance is expressed as a multiple of its "own" Sigma.

If Sigma functions well, approximately 68.3% of the variances are expected to fall within one Sigma of the zero level, and about 95% of the variances to fall within two Sigmas of the zero level. Thus, with variances expressed in Sigma units, about 68.3% of the "variances expressed in Sigma units" should fall within 1.00 away from zero (from -1.00 to +1.00) and about 95% of the "variances expressed in Sigma units" should fall within 2.00 away from zero (from -2.00 to +2.00). The validity of this trial Sigma is cross-checked measuring the dispersion of the "valuation variances in sigma units," usually county by county, without respect to raw score, land use, or any other form of subdivision.

A measure of dispersion must then be derived 296. The "valuation variances in sigma units" are each squared. The sum of these squares is divided by N-1 where N is the number of valuations in that county or other test area, and then the square root is taken. The result is the test measure of dispersion. It is itself a forecast standard deviation of the variances as measured in Sigma units. By definition, this should ideally be exactly 1.00.

The measure of dispersion is then compared to the desired accuracy range 298, in the preferred embodiment 1.00. If this measure of dispersion is exactly 1.00 in a county or state, then the trial Sigma is exactly as it should be and is considered validated. If this measure is less than 1.00, then some of the trial Sigmas are too conservative or wider than they should be. This has arisen in the hierarchical process of division and subdivision. This result, however, is considered an acceptable dispersion, and the trial Sigma is retained as in element 300.

However, if this measure is greater than 1.00, for example 1.05, then somehow in the computations and reshuffling some of the Sigmas have been made smaller than they really should be, and so at least some of the declared Forecast Standard Deviations in the county will be systematically smaller or more confident than they should be. If the measure of dispersion is outside of the acceptable accuracy range, usually above 1.00, then it is corrected and accepted as in element 302. To correct a trial Sigma all the Sigmas for all valuations in any subdivision group within the subject sub-division should be multiplied by the measure of dispersion, resulting in a modified Sigma which, if tested again, would naturally yield a measure of dispersion of 1.00. If the measure of dispersion is 1.05, all Sigmas within that state or county are peremptorily multiplied by 1.05, resulting in a set of slightly larger, wider Sigmas. These larger Sigmas would then, by definition, have a correct and valid dispersion measure of 1.00. This ensures that the Sigma given to a user of such data, if anything, is wider than any actual standard deviation later calculated. The accuracy of the Sigma generated takes precedence over claiming accuracy of the underlying automated valuation model. Thus, by creating a slightly wider Sigma, when necessary to encompass all of the variances, the accuracy of the Sigma is ensured while the automated valuation model itself may appear to be somewhat less accurate than it really is. Other methods may be employed to correct the trial Sigma, including recalculating or moving to a higher sub-division to ensure accuracy.

Performing this validation process, and either retaining the trial Sigmas or modifying the trial Sigmas in the direction of conservatism, produces a final Sigma for all valuations and all subgroups. The "after-multiplication," such as multiplying by a measure of dispersion, if necessary, should also be applied to future Sigmas assigned to valuations within this county or other test area, so that Sigmas issued in the future will also be reasonable and able to pass a testing process.

The corrected or already correct Sigma is then finalized 304 in the preferred embodiment by rounding the value provided to four decimal places, thus producing a Sigma represented as a percentage to two significant digits, for example 12.57%. Alternative embodiments could round to other significant digits.

In the preferred embodiment of this invention, during the finalization step 304 if the Sigma is less than 0.08 or 8%, it is rounded up to 0.08 or 8%. In alternative embodiments this rounding may be to a different percentage or may not take place at all. In alternative embodiments, Sigma may also be delivered to a user in numerical as well as percentage form. For example, if a property is valued at $500,000 with a Sigma of 8% then Sigma could be given as $40,000 since $40,000 is 8% of $500,000. Once finalized, the validated Sigma in percentage or numerical form is returned 306 (136 in Figure 2). It is then possible to study the national distribution of all of the final Sigmas and look at the percentiles of this distribution. For instance, the 80$^{th}$ percentile of that distribution means that 80% of the Sigmas are lower than or equal to that number, and the remaining 20% are higher.

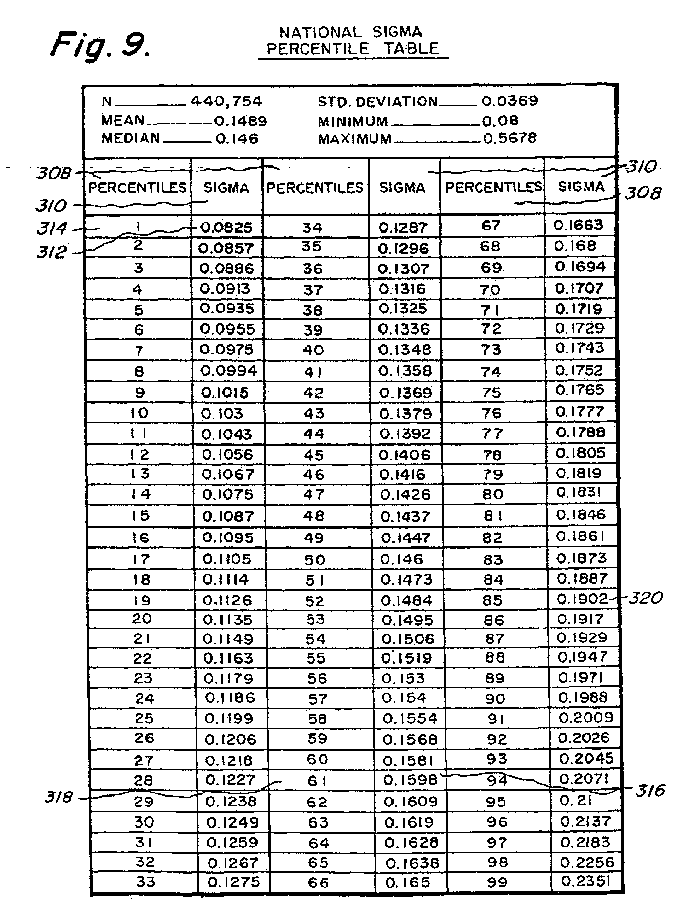

The final Sigmas may then be divided into percentiles such that the first percentile defines the lowest one percent of Sigma values (as equal to or below that first percentile) and the ninety-ninth percentile defines the highest one percent of Sigma values (as above that ninety-ninth percentile). Valuations with Sigmas in the first percentile of Sigma are likely more accurate than valuations with Sigmas at the ninety-ninth percentile or above it. Percentiles enable the application of the forecast standard deviation data to other uses, such as a right tail confidence score or responsive confidence score. Referring now to Figure 9, a national sigma percentile table is depicted. The two columns in this table are percentile 308 and Sigma 310. This table represents in what percentile a Sigma of a certain percentage size falls when compared to Sigmas nationally. For example, a Sigma of 0.0825, representing a Sigma of 8.25%, in element 312 is at the level of the first percentile 314. A Sigma of 0.1598, representing a Sigma of 15.98%, in element 316 is at the level of the sixty-first percentile 318. Using this table, it can be seen that eighty-five percent of valuations have Sigmas less than 0.1902 or 19.02%, depicted in element 320.

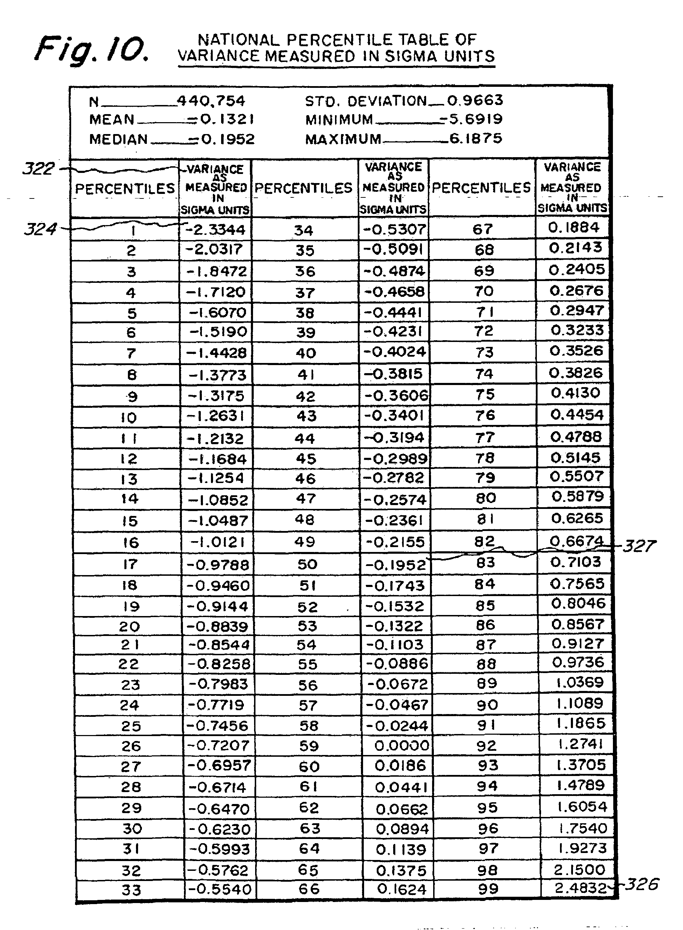

The distribution of valuation variances as measured in their own Sigma units may also be depicted in a percentile table. This type of Sigma unit and percentile table representation is depicted in Figure 10. The Sigma column from Figure 9 is replaced with variance measured in Sigma units 322. When depicted in Sigma units, the valuation variances in the table range from -2.334 in percentile 1, depicted in element 324, to 2.4832 in percentile 99, depicted in element 326.

This means that only 1 percent of the valuations were more than 2.334 of their own Sigma units below their reference values, usually sale prices. Similarly, it means that only 1 percent of the valuations were more than 2.4832 of their own Sigma units above their reference values. Thus, once Sigma has been delivered for a particular valuation, the user can reasonably construct boundaries for the likely true value, and expect on the average only a 1% probability in each of the two tails of too-high or too-low valuation. As another example, this percentile table shows that only about two percent of valuations are more than two of their own forecast standard deviations below their reference values. It also shows that no more than roughly two percent of valuations are more than two of their own forecast standard deviations above their reference values. This leaves the remaining approximately ninety-five percent of values within plus or minus two Forecast Standard Deviations of their reference values.

This automated valuation model had a slight tendency to undervalue properties. Note that the 50$^{th}$ percentile, which is the median of the distribution, is -0.1952 Sigma units, depicted in element 327. Some individual Sigmas are larger than others, but if all Sigmas were 10% then the median valuation would be 10% times -0.1952, or 1.952% below the true value. A two-percent tendency to undervaluation makes the Forecast Standard Deviation slightly larger than the traditional standard deviation, but it is by no means unacceptable nor does it make that automated valuation model unacceptable for use.

Of special interest is the "right tail" of the distribution of valuation variances or errors as measured in Sigma units. If the variance is too high, then the property is too highly overvalued by the valuation model. If the valuation is too highly overvalued and the borrower goes into default on the loan, the lender may face exposure and loss of money after foreclosure. If a property is valued at $600,000 but the borrower defaults and the property brings only $480,000 in a foreclosure sale, a lender who has lent 90% or $540,000 of the initial sale price has lost money.

Thus, the probability, the size in the percentile distribution, of a right-tail event is useful in determining the probability of possible overvaluation. In the preferred embodiment, a right tail event is defined as valuing a property by ten percent or more above its true value. In alternative embodiments, other thresholds might be used.

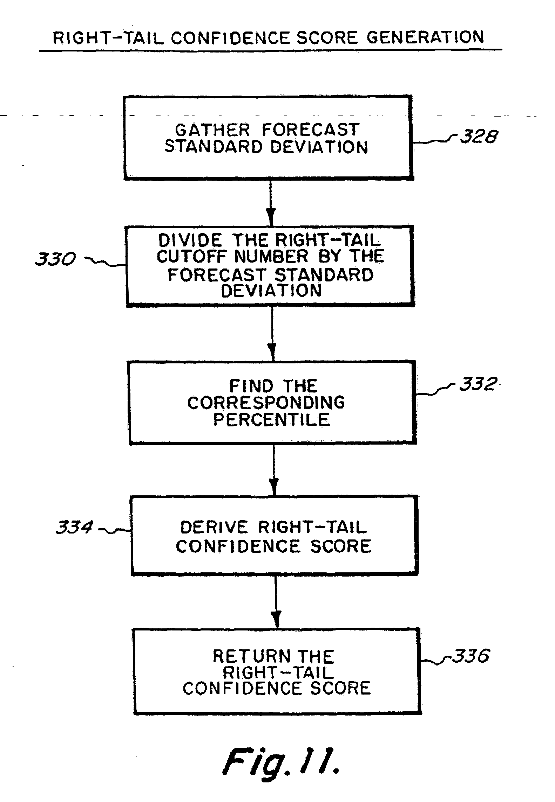

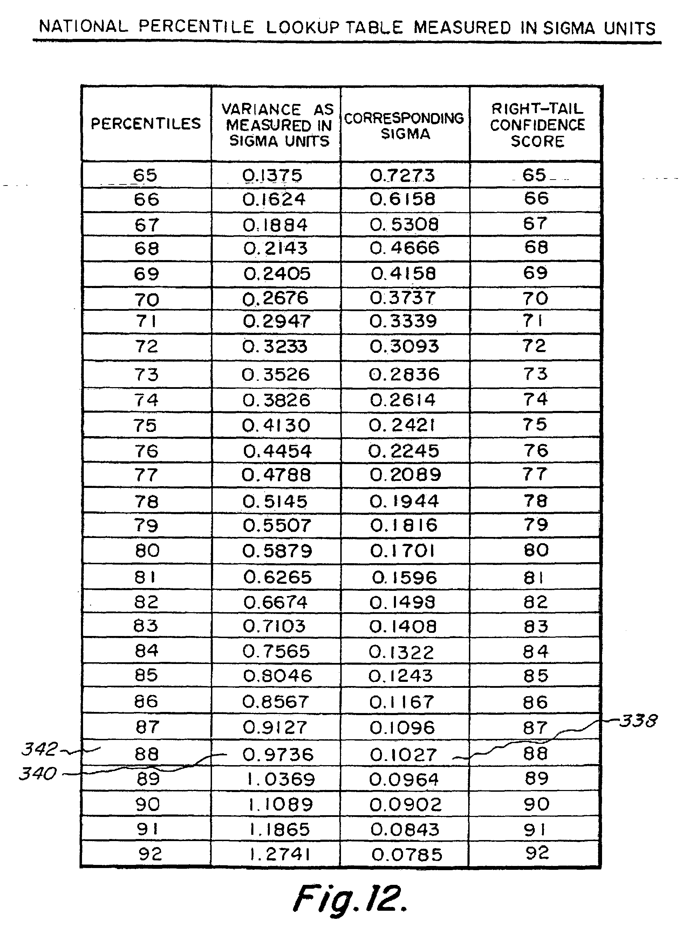

In the preferred embodiment, the right-tail confidence score represents the probability that the valuation is not more than ten percent above the true value of the property. These right-tail confidence scores may be computed from the percentile tables using elementary algebra, when the Sigma assigned to the property valuation is known. A flowchart of the steps to calculate a right-tail confidence score is depicted in Figure 11. The first step in this process is to gather the Forecast Standard Deviation (Sigma) of the subject property 328. Forecast Standard Deviations have already been created and are available after the completion of validation of a trial Sigma. The next step is to divide the desired right-tail cutoff number 330 by the Sigma for the subject property valuation. This right-tail cutoff number is a value corresponding to a percentage level at which the valuation will have exceeded the actual value of the property by a predetermined unacceptable level. The right-tail cutoff number is stated as a percentage, therefore it is a percentage of overvaluation. As stated above, the right-tail cutoff number is also known as the first overvaluation criterion which is a percentage set at a predetermined level of unacceptable excess valuation. The division of the desired right-tail cutoff number 330 by the Sigma for the particular subject property valuation results in a corresponding right-tail cutoff number in Sigma units. This right-tail cutoff number in Sigma units is used, along with a national distribution percentile valuation variance table such as the one depicted in Figure 12, to find the corresponding right-tail confidence score.

Referring to the table depicted in Figure 12, a percentile may be found in the table, depicted in element 332. If the number is not found directly in the national percentile lookup table measured in Sigma units, then the right-tail confidence score may be derived, using linear interpolation between the nearest two points, as depicted in element 334. Otherwise, the percentile of variances measured in Sigma units that corresponds to the number of Sigma units which the right-tail cutoff number measured in Sigma units is returned as the right-tail confidence score for the subject property valuation 336.

Referring now to Figure 12, suppose for a particular property valuation, the Sigma returned is 0.1027, which is representative of a Forecast Standard Deviation of 10.27%, depicted in element 338. The chosen cutoff level of 0.10 in the preferred embodiment is divided by the Sigma of 0.1027, for calculating a right-tail confidence score. This division produces a result, in Sigma units, that corresponds to a particular percentile in the table in Figure 12. In the example presented here, this division results in the value 0.9736, depicted in element 340. Simply speaking, since (0.10)/(0.1027) = 0.9736, a ten percent or more overvaluation is in this particular case equivalent to an overvaluation of 0.9736 or more Sigma units, with the Sigma as defined for this individual case. Using the table, it can be seen that this value corresponds to the eighty-eighth percentile in of valuation variance as measured in Sigma units 342. This represents a probability of eighty-eight percent that the valuation with a Sigma of 0.1027 is not more than 10% over its actual true value or sale price. In this case, the right-tail confidence score for this valuation is 88. The probability that this valuation is not more than 10% "high" is reported as 88 percent. The probability that it is in fact more than 10% high is reported as 100 minus 88, or 12 percent. If the value returned using this method is not explicitly within this table, linear interpolation may be used to determine to which number in Sigma units the value is most closely related and to thereby return a right-tail confidence score for these "in-between" values.

A responsive confidence score may also be generated from and consistent with the data generated thus far. A responsive confidence score is an indication, based upon a user inputted value, of an automated valuation model's confidence in that inputted valuation. The difference here is that the responsive score is a confidence score in response to a valuation inputted by the user, rather than in response to a valuation generated by the automated valuation model itself.

For example, suppose the individual to whom the lender is considering loaning money to purchase a home has better than average credit, but is requesting money in a loan based on a valuation that appears to exceed the valuation provided by the automated valuation model. From the lender's perspective, making the deal generates revenue. However, lenders do not want to be unnecessarily exposed to the risk of loss in the event of a default. Because this individual appears very likely to make his or her payments, the lender may be willing to increase the loan amount. At this point, the lender could input the slightly higher valuation and if the lender receives a responsive confidence score only slightly less than the normal automated valuation model's valuation confidence score, the lender can choose to fund the loan, despite there being a little more risk of loss in the event of default.

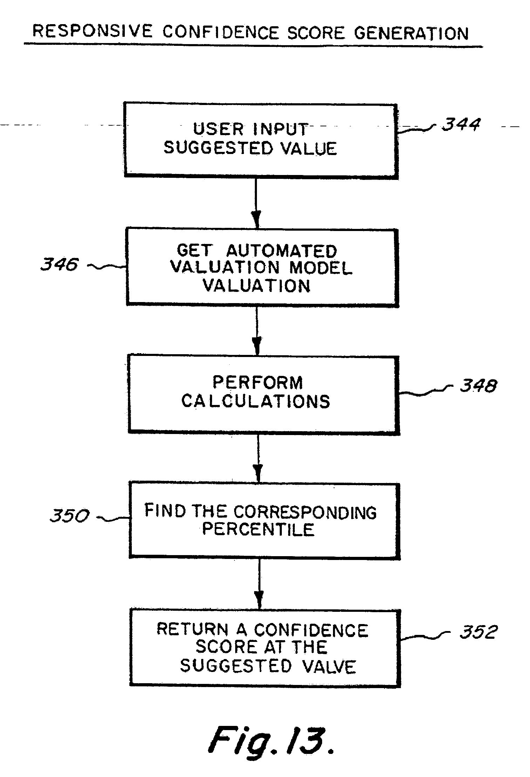

Referring next to Figure 13, a responsive confidence score generation flowchart is depicted. The first step is to receive the user input 344. This would take place by one of the means of input in Figure 1, using the input and output connectors 112. The user input will consist of a valuation and some indication of the location of the property such that the responsive confidence score software will be able to determine for which property the valuation is being suggested. The next step is to request and receive the actual automated valuation for the subject property from the automated valuation model 346. Next, the calculations necessary to derive the responsive confidence score 348. The general equation to deliver a responsive confidence score, in the case of the preferred embodiment where the right tail cutoff level is ten percent, is as follows:

$$\text{Automated Valuation Model Variance} > [(1 + b)/(1 + a)]-1$$

In this inequality "a" is the percentage, expressed in decimal notation that the suggested, user-supplied, value is above the automated valuation model's valuation and "b" is the designated right-tail cutoff number, expressed as a percentage in decimal notation. The Automated Valuation Model Variance is then computed in Sigma units, using the Sigma that was generated previously. A lookup table similar to the one depicted in Figure 12 is then used to find the automated valuation model variance in Sigma units and its corresponding percentile 350. This corresponding percentile is the same as the responsive confidence score. The percentile corresponding to this variance measured in Sigma units is then returned as the responsive confidence score 352. In the preferred embodiment, the designated right-tail cutoff percentage or "b" is 0.10 or 10%. This number may be changed to be any number, but 0.10 will provide a responsive confidence score that represents the probability that the user-supplied valuation, as opposed to the automated-valuation-model-generated valuation in the previous example, is no higher than 10% above the underlying true reference value of the property.

As stated above, the example 10% right-tail cutoff percentage may be changed. Using 1.10 as the 1 + b portion of the above inequality represents a 10% right-tail cutoff percentage. Other percentages, for example 12%, 15% or 8%, may be used as right-tail cutoff levels. However, 10% provides the best indication of valuation accuracy while still providing confidence in the accuracy of the responsive confidence score. Other percentages may be used. However, other larger percentages may not provide any useful indication of the accuracy of the valuation. Smaller percentages also may not be feasible as the cutoff level of overvaluation may be so small as to often cut off valuations that are otherwise still within an acceptable range.

As an example, suppose a lender receives a request to lend to a buyer to purchase a property based on a suggested property value of $315,000. However, when the lender requests an automated valuation model valuation, the automated valuation model returns a valuation of $300,000 with an assigned Sigma of 0.1027 and a corresponding confidence score of 88 (see Figure 12). This represents a 5% difference in valuation, since $315,000 is 5% greater than $300,000. Therefore, the equation to create a responsive confidence score, with a ten percent right tail cutoff percentage, and the same Sigma of 0.1027, will be:

```
Automated Valuation Model Variance > [(1.10)/(1 + 0.05)]-1
```

The number 0.05 was chosen for "a" because the valuation provided, $315,000, is 5% or 0.05 over the automated valuation model's valuation. The right-tail cutoff percentage in this example is 10% or 0.10 as demonstrated through the use of 1.10 in place of the 1 + b portion of the inequality. The right side of this equation is computed to be 0.0476 or 4.76%. This means that the user-supplied valuation of $315,000 will be ten percent or more over the property's true value if and only if the original automated valuation model-generated valuation of $300,000 is 4.76% or more over the property's true value.

This 4.76% is now computed as a percentage in Sigma units, using the Sigma assigned to that particular property's valuation, which in this case was 0.1027. The derived automated valuation model variance, 4.76% in this example, is divided by the original Sigma percentage. In this case, the original Sigma percentage was 10.27% or .1027. So, 0.0476/0.1027 is 0.4635. Therefore, the user-supplied valuation of $315,000 will be ten percent or more over the property's true value if and only if the original automated valuation model-generated valuation of $300,000 is 0.4635 Sigma units (which for a Sigma of 10.27% is equivalent to 4.76%) or more above the property's true value.

This number in Sigma units is referred into the percentile table of variances in Sigma units to obtain the responsive confidence score. In this example, this number 0.4635 is between the 76th and 77th percentiles. Thus, linear interpolation must be used to derive the actual responsive confidence score. Had the number exactly been in the table, a precise integer responsive confidence score could be provided. Here, using linear interpolation, the exact responsive confidence score is 76.54, about halfway between 76 and 77 in Figure 12. In the preferred embodiment, for both the original "normal" confidence score and the responsive confidence score, as can be seen from the percentile-Sigma correspondence lookup table, confidence scores below 65 and above 92 are not reported. As stated above, raw confidence scores are refined into reported confidence scores in several ways, one of which involves eliminating valuations and the corresponding reported confidence scores below 65 as too inaccurate to report and rounding down reported confidence scores above 92 to 92 in order to avoid implying certainty which is not to be expected in automated real estate valuations. In other embodiments, the raw confidence scores or other broader indicia of confidence may themselves be reported, but this is not optimal. This methodology is consistent with methodology of the above referenced co-pending patent application 10/771,069 filed on February 3, 2004.

As expected, the responsive confidence score, assigned to the user-supplied valuation of $315,000 was 76.54, which is lower than the confidence score of 88 assigned to the automated-valuation-model-generated valuation of $300,000. This is reasonable. A higher valuation has a larger probability of being too high in the first place. In this example, the valuation of $300,000 is assigned a 12% probability of being ten percent or more above the true value of the property, since 100% minus 88% is 12%. The higher valuation of $315, 000 is assigned a 23.46% probability of being ten percent or more above the true value, since 100% minus 76.54% is 23.46%. The larger percentage of 23.46% represents a greater risk assigned to the more generous valuation and correspondingly more generous loan.

A method of generating a forecast standard deviation or Sigma has been described. A method of deriving a right-tail confidence score based on the Sigma and a responsive confidence score also based on the generated Sigma have also been described. It is to be understood that the foregoing description has been made with respect to specific embodiments thereof for illustrative purposes only. The scope of the present invention is limited only by the following claims, as interpreted in patent law.

**Claims**

1.  A computer-based method of calculating a forecast standard deviation for at least one property evaluated by an automated valuation model and located in a predetermined geographic area comprising the steps of:

    categorizing a plurality of properties into at least one group of properties in said predetermined geographic area; and
    calculating a standard deviation for said at least one property from individual reference values associated with said plurality of properties in said at least one group to thereby calculate a forecast standard deviation.

2.  The method of Claim 1, further comprising the step of applying said standard deviation for said at least one group to each of said plurality of properties.

3.  The method of Claim 1, wherein said plurality of properties are categorized into at least one group using a raw confidence score of said at least one property.

4.  The method of Claim 1, wherein said plurality of properties are categorized into at least one group using the confidence scores of said plurality of properties.

5.  The method of Claim 1, wherein said plurality of properties are categorized into at least one group using at least one of the following:

    i) state
    ii) county
    iii) land-use type
    iv) economic tier

    of said at least two properties

6.  The method of Claim 1, wherein said individual reference value is a property sale price and/or an appraisal value.

7.  The method of Claim 1, wherein said calculating step further comprises the validation of said forecast standard deviation for accuracy.

8.  The method of Claim 1, further comprising the step of presenting said forecast standard deviation aggregate data in terms of percentiles.

9.  A computer-based method of generating a right-tail confidence score for a valuation of a subject property evaluated using an automated valuation model comprising the steps of:

    obtaining a forecast standard deviation;
    dividing a right-tail cutoff number by said forecast standard deviation to compute a corresponding right-tail cutoff number in Sigma units; and
    correlating said corresponding right-tail cutoff number in Sigma units with a right-tail confidence score using a table of percentiles.

10. The method of Claim 9, wherein said obtaining step is accomplished by computing said forecast standard deviation in terms of a percentage.

11. A computer-based method of generating a responsive confidence score for a valuation of a subject property evaluated using an automated valuation model comprising the steps of:

    obtaining at least one user input suggested value for the subject property;
    obtaining at least one automated valuation model valuation for said subject property;
    calculating a right tail cutoff number in terms of Sigma units based on said at least one user input suggested value of said subject property; and
    using a table of percentiles to correlate said cutoff number in Sigma units with a responsive confidence score.

**12.** The method of Claim 11, wherein said calculating step is accomplished using the formula:

$$\texttt{automated valuation model variance > [(1 + b)/(1 + a)] - 1}$$

wherein
a is the percentage, represented in decimal notation, of difference between said user input suggested value and said automated valuation model valuation of said subject property; and
b is the percentage, represented in decimal notation, of said right-tail cutoff number.

**13.** The method of Claim 11, wherein said correlating step is accomplished using aggregate forecast standard deviation data presented as percentiles.

**14.** The method of Claim 9 or Claim 11, wherein said correlating step is accomplished using aggregate valuation variance data in sigma units presented as percentiles.

**15.** A computer-based method of calculating a forecast standard deviation for a plurality of properties each evaluated by an automated valuation model and each located in a predetermined geographic area comprising the steps of:

categorizing said plurality of properties into at least one group of properties in said predetermined geographic area; and
calculating a standard deviation for the variances of the valuations of said plurality of properties from a reference value associated with each of said plurality of properties in said at least one group to thereby calculate a forecast standard deviation.

**16.** The method of Claim 1 or Claim 15, wherein said standard deviation is calculated using the following equation:

$$\texttt{forecast standard deviation} = \sqrt{\{[\textstyle\sum(v - 0)^2]/(n-1)\}}$$

wherein
v is the individual valuation variance described by the equation v = (x - p)/p;
x is the automated valuation of each individual property in said group properties;
p is a reference value for each individual property in said group of properties; and
n is the total number of properties in said group.

**17.** The method of Claim 15, wherein said plurality of properties are categorized into a group of properties each having the same confidence score.

**18.** The method of Claim 15, wherein said plurality of properties are categorized into a group of properties each having the same raw confidence score.

**19.** The method of Claim 15, wherein said plurality of properties are categorized into a group of properties each having the same land-use type and/or the same economic tier.

**20.** The method of Claim 15, wherein said predetermined geographic area is a state and/or a county in which said plurality of properties are located.

**21.** The method of Claim 15, wherein the said individual reference values include at least one sales price of properties in said predetermined geographic area.

**22.** The method of Claim 15, wherein said individual reference values are appraisal values of properties in said predetermined geographic area.

**23.** The method of Claim 1 or Claim 15, further comprising the step of validation of said standard deviation for accuracy.

24. The method of Claim 7 or Claim 23, wherein said validation step comprises:

expressing the variances between the valuations generated by an automated valuation model and the reference values of properties in Sigma units;
deriving a measure of dispersion of said variances in Sigma units;
comparing said measure of dispersion of said variances in Sigma units to an accuracy range;
correcting said forecast standard deviation using said measure of dispersion; and
returning a validated forecast standard deviation.

25. The method of Claim 24, wherein said measure of dispersion is a standard deviation.

26. The method of Claim 24, wherein said measure of dispersion is a forecast standard deviation.

27. The method of Claim 24, wherein said correcting step is accomplished by multiplying said forecast standard deviation by said measure of dispersion.

28. A computer-based apparatus for calculating a forecast standard deviation for at least one property evaluated by an automated valuation model and located in a predetermined geographic area comprising:

data storage means for storing data of characteristics of a plurality of properties evaluated by an automated valuation model;
categorization means connected to said data storage means for categorizing a plurality of properties into at least one group of properties in said predetermined geographic area;
calculation means connected to said categorization means for calculating a forecast standard deviation for said at least one property from individual reference values associated with said plurality of properties in said at least one group; and
output means connected to said calculating means for providing forecast standard deviation output data.

29. The apparatus of Claim 28, further comprising application means for applying said standard deviation for said at least one group to each of said plurality of properties.

30. The apparatus of Claim 28, wherein the categorization means is arranged to categorize said plurality of properties into at least one group using a raw confidence score of said plurality of properties.

31. The apparatus of Claim 28, wherein said data storage means includes a means for storing a confidence score associated with each of said plurality of properties and said categorization means is arranged to categorize each of said plurality of properties into at least one group using the confidence score of said plurality of properties.

32. The apparatus of Claim 28, wherein said data storage means includes a means for storing a confidence score associated with each of said plurality of properties and said categorization means is arranged to categorize each of said plurality of properties into at least one group using the raw confidence score of said plurality of properties.

33. The apparatus of Claim 28, wherein said categorization means includes means for categorizing each of said plurality of properties and said categorization means is arranged to categorize each of said plurality of properties into at least one group using at least one of the following:

i) state
ii) county
iii) land-use type
iv) economic tier

the state of said plurality of properties.

34. The apparatus of Claim 28, wherein said individual reference value is a property sale price and/or an appraised value.

35. The apparatus of Claim 28, further comprising a presentation means connected to said output means for presenting forecast standard deviation aggregate data in terms of percentiles.

**36.** The apparatus of Claim 28, further comprising a presentation means connected to said output means for presenting valuation variance aggregate data in sigma units in terms of percentiles.

**37.** A computer-based apparatus for generating a right-tail confidence score for a valuation of a subject property evaluated using an automated valuation model comprising:

data storage means for storing data of characteristics of said subject property;
obtaining means connected to said data storage means for obtaining a forecast standard deviation;
calculating means connected to said obtaining means including a dividing means for dividing a right-tail confidence score cutoff number by said forecast standard deviation to compute a corresponding right-tail cutoff number in Sigma units; and
correlating means connected to said calculating means and said dividing means for correlating said corresponding right-tail cutoff number in Sigma units with a right-tail confidence score.

**38.** The apparatus of Claim 37, wherein said obtaining means obtains said forecast standard deviation as a percentage.

**39.** The apparatus of Claim 37, wherein said calculating means is arranged to calculate said forecast standard deviation and said obtaining means is arranged to obtain said forecast standard deviation from said calculating means.

**40.** A computer-based apparatus for generating a responsive confidence score for a valuation of a subject property evaluated using an automated valuation model comprising:

input means for inputting at least one user input suggested value for the subject property;
data storage means connected to said input means for obtaining at least one automated valuation model valuation for said subject property;
calculating means connected to said data storage means for calculating a valuation variance in Sigma units based on said at least one user input suggested value of said subject property; and
correlating means connected to said calculating means for correlating said valuation variance in Sigma units with a responsive confidence score.

**41.** The method of Claim 40, wherein said calculating means uses the formula:

$$\texttt{automated valuation model variance} > [(1 + b)/(1 + a)] - 1$$

wherein
a is the percentage, represented in decimal notation, of difference between said user input suggested value and said automated valuation model valuation of said subject property; and
b is the percentage, represented in decimal notation, of a right-tail cutoff number.

**42.** The method of Claim 40, wherein said correlating means uses aggregate forecast standard deviation data presented as percentiles.

**43.** The method of Claim 40, wherein said correlating means uses aggregate valuation variance data measured in Sigma units presented as percentiles.

**44.** A computer-based apparatus for calculating a forecast standard deviation for a plurality of properties each evaluated by an automated valuation model and each located in a predetermined geographic area comprising:

data storage means for storing data of characteristics of a plurality of properties each evaluated by an automated valuation model;
categorizing means connected to said data processing means for receiving data of characteristics of said plurality of properties each evaluated by an automated valuation model to categorize said plurality of properties into at least one group of properties in said predetermined geographic area;
calculating means connected to the output of said categorizing means for calculating said forecast standard deviation for said plurality of properties from references values each associated with one of said plurality of properties in said at least one group; and

output means connected to said calculating means for providing forecast standard deviation output data.

45. The apparatus of Claim 67, wherein said forecast standard deviation is calculated using the following equation:

$$\texttt{forecast standard deviation} = \sqrt{[\sum(v - 0)^2]/(n-1)}$$

wherein
v is the individual valuation variances described by the equation v=(x - p)/p;
x is the automated valuation of each individual property in said group of properties;
p is a reference value for each individual property in said group of properties; and
n is the total number of properties in said group

46. The apparatus of Claim 28 or claim 44, wherein said categorizing means is arranged to categorize said plurality of properties into a group of properties each having the same confidence score.

47. The apparatus of Claim 44, wherein said categorizing means is arranged to categorize said plurality of properties into a group of properties each having the same raw confidence score.

48. The apparatus of Claim 44, wherein said categorizing means categorizes said plurality of properties into a group of properties each having the same land-use type and/or the same economic tier.

49. The apparatus of Claim 44, wherein said predetermined geographic area is a state and/or a county in which said plurality of properties are located.

50. The apparatus of Claim 28 or Claim 44, wherein the said individual reference values include at least one sales price of properties in said predetermined geographic area.

51. The apparatus of Claim 44 wherein said individual reference values are sales prices and/or appraisal values of properties in said predetermined geographic area.

52. The apparatus of Claim 28 or Claim 44, further comprising validation means connected to said calculating means for validating the accuracy of said forecast standard deviation.

53. The apparatus of Claim 52, wherein said validation means includes a means for validating the accuracy of said forecast standard deviation by:

expressing the variances between the valuations generated by an automated valuation model and the reference values of properties in Sigma units;
deriving a measure of dispersion of said variances in Sigma units;
comparing said measure of dispersion of said variances in Sigma units to an accuracy range;
correcting said forecast standard deviation using said measure of dispersion; and
returning a validated forecast standard deviation.

54. The apparatus of Claim 53, wherein said measure of dispersion is a standard deviation.

55. The apparatus of Claim 53, wherein said measure of dispersion is a forecast standard deviation.

56. The apparatus of Claim 53, wherein said correcting step is accomplished by multiplying said trial forecast standard deviation by said measure of dispersion.

*Fig. I.*

EP 1 638 011 A2

SIGMA GENERATION

GATHER DATA — *124*

↓

*126* — DIVIDE THE PROPERTIES

↓

CALCULATE FORECAST STANDARD DEVIATIONS — *128*

↓ ↑

*130* — SUB-DIVIDE THE PROPERTIES

↓

RETURN TRIAL SIGMA — *132*

↓

*134* — VALIDATE AFTER TRIAL OR SIGMA

↓

RETURN THE SIGMA FOR EACH SUB-DIVISION — *136*

↓

*138* — BREAK AGGREGATE DATA DOWN BY PERCENTILE

*Fig. 2.*

STANDARD DEVIATION BY STATE

| STATE | MEAN OF VARIANCES | MEDIAN OF VARIANCES | STANDARD DEVIATION OF VARIANCES | NUMBER OF CASES |
|---|---|---|---|---|
| AL | 0.4% | -0.5% | 14.8% | 796 |
| AR | 2.2% | 1.1% | 16.4% | 856 |
| AZ | -1.3% | -2.0% | 13.0% | 20,090 |
| • | • | • | • | • |
| • | • | • | • | • |
| • | • | • | • | • |
| VA | -1.8% | -2.6% | 12.4% | 14,687 |
| WA | 0.1% | -1.1% | 14.9% | 15,271 |
| WI | 1.8% | 0.1% | 15.7% | 1,881 |

*Fig. 3a.*

EP 1 638 011 A2

STANDARD DEVIATION BY LAND USE

| LAND USE | MEAN OF VARIANCES | MEDIAN OF VARIANCES | STANDARD DEVIATION OF VARIANCES | NUMBER OF CASES |
|---|---|---|---|---|
| CABIN | -12.7% | -12.7% | 16.2% | 2 |
| CONDOMINIUMS TOWNHOUSE | -2.2% | -3.6% | 13.5% | 64,604 |
| COOPERATIVES | -9.9% | -8.8% | 18.3% | 256 |
| DUPLEXES | -5.9% | -6.9% | 18.1% | 9,121 |
| PUD | -2.0% | -2.9% | 11.9% | 14,915 |
| SINGLE FAMILY RESIDENCES | -1.3% | -2.4% | 15.1% | 351,856 |

*Fig. 3b.*

### STANDARD DEVIATION BY ECONOMIC TIER

| QUARTILE | MEAN OF VARIANCES | MEDIAN OF VARIANCES | STANDARD DEVIATION OF VARIANCES |
|---|---|---|---|
| I | -3.5% | -5.2% | 15.5% |
| II | -1.8% | -3.1% | 14.4% |
| III | -1.2% | -2.2% | 13.8% |
| IV | -0.2% | -1% | 15.3% |

*Fig. 3c.*

EP 1 638 011 A2

STANDARD DEVIATION BY RAW SCORE

| RAW SCORE | MEAN OF VARIANCES | MEDIAN OF VARIANCES | STANDARD DEVIATION OF VARIANCES | SUM OF SQUARES OF VARIANCES | NUMBER OF CASES | SIGMA FOR THIS RAW SCORE LEVEL |
|---|---|---|---|---|---|---|
| 40 | 1.72% | 1.44% | 22.56% | 40.55 | 793 | 22.63% |
| 41 | 0.85% | 0.95% | 21.07% | 31.93 | 719 | 21.09% |
| 42 | 0.79% | -0.81% | 21.27% | 44.75 | 989 | 21.28% |
| • • • | • • • | • • • | • • • | • • • | • • • | • • • |
| 65 | -2.79% | -3.53% | 18.78% | 326.54 | 9,059 | 18.99% |
| 66 | 0.93% | -0.58% | 18.23% | 159.84 | 4,799 | 18.25% |
| 67 | 1.25% | 0.00% | 18.41% | 175.53 | 5,156 | 18.45% |
| • • • | • • • | • • • | • • • | • • • | • • • | • • • |
| 86 | -2.66% | -3.28% | 13.22% | 291.85 | 16,050 | 13.49% |
| 87 | -2.81% | -3.37% | 12.61% | 274.98 | 16,980 | 12.92% |
| 88 | -2.75% | -3.49% | 12.32% | 269.34 | 16,913 | 12.62% |
| • • • | • • • | • • • | • • • | • • • | • • • | • • • |
| 98 | -3.64% | -4.00% | 9.78% | 67.17 | 6,170 | 10.44% |
| 99 | -3.98% | -4.18% | 9.60% | 50.28 | 4,653 | 10.40% |
| 100 | -4.29% | -4.41% | 9.72% | 110.36 | 9,786 | 10.62% |

*Fig.3d.*

EP 1 638 011 A2

SIGMA BY RAW SCORE GRAPH

Fig. 3e.

EP 1 638 011 A2

NATIONAL STATE BY STATE SIGMA TABLE

| RAW SCORE | STATE | MEAN OF VARIANCES | MEDIAN OF VARIANCES | STANDARD DEVIATION OF VARIANCES | SUM OF SQUARES OF VARIANCES | NUMBER OF CASES | SIGMA FOR THIS RAW SCORE LEVEL |
|---|---|---|---|---|---|---|---|
| 80 | AL | 4.55% | 3.51% | 11.94% | 0.34 | 22 | 12.81% |
| 80 | AR | 2.76% | 0.00% | 13.75% | 0.51 | 27 | 14.03% |
| 80 | AZ | -0.01 | -0.68% | 14.17% | 13.54 | 675 | 14.17% |
| 80 | CA | -2.68% | -3.33% | 13.94% | 65.20 | 3,235 | 14.20% |
| • | • | • | • | • | • | • | • |
| • | • | • | • | • | • | • | • |
| • | • | • | • | • | • | • | • |
| 80 | WI | 3.54% | 3.45% | 14.54 | 1.26 | 59 | 14.76% |

*Fig. 4.*

EP 1 638 011 A2

| RAW SCORE | STATE | MEAN OF VARIANCES | MEDIAN OF VARIANCES | STANDARD DEVIATION OF VARIANCES | SUM OF SQUARES OF VARIANCES | NUMBER OF CASES | SIGMA FOR THIS RAW SCORE LEVEL |
|---|---|---|---|---|---|---|---|
| 40 | CA | -1.88% | -1.95% | 24.43% | 6.43 | 108 | 24.51% |
| 41 | CA | 0.75% | 0.87% | 18.01% | 3.15 | 98 | 18.03% |
| 42 | CA | 0.43% | -0.80% | 20.75% | 7.24 | 169 | 20.76% |
| • | • | • | • | • | • | • | • |
| • | • | • | • | • | • | • | • |
| • | • | • | • | • | • | • | • |
| 67 | CA | -0.86% | -2.50% | 17.36% | 29.43 | 975 | 17.38% |
| 68 | CA | -1.22% | -2.74% | 17.03% | 32.94 | 1,131 | 17.07% |
| 69 | CA | -1.15% | -2.73 | 17.41% | 36.42 | 1,197 | 18.45% |
| • | • | • | • | • | • | • | • |
| • | • | • | • | • | • | • | • |
| • | • | • | • | • | • | • | • |
| 98 | CA | -4.98% | -5.48 | 9.37% | 18.75 | 1,667 | 10.61% |
| 99 | CA | -5.14% | -5.47 | 9.54% | 14.25 | 1,214 | 10.84% |
| 100 | CA | -5.67% | -6.00 | 9.27% | 26.21 | 2,219 | 10.87% |

*Fig. 5.*

## COUNTY SIGMA TABLE

| RAW SCORE | STATE | COUNTY | MEAN OF VARIANCES | MEDIAN OF VARIANCES | STANDARD DEVIATION OF VARIANCES | SUM OF SQUARES OF VARIANCES | NUMBER OF CASES | SIGMA FOR THIS RAW SCORE LEVEL |
|---|---|---|---|---|---|---|---|---|
| 80 | CA | ALAMEDA | −5.35% | −5.42% | 11.91% | 2.730 | 161 | 13.06% |
| 80' | CA | AMADOR | −20.30% | −20.30% | − | 0.040 | 1 | − |
| 80 | CA | BUTTE | −3.19% | −2.86% | 7.71% | 0.130 | 19 | 8.38% |
| • | • | • | • | • | • | • | • | • |
| • | • | • | • | • | • | • | • | • |
| • | • | • | • | • | • | • | • | • |
| 80 | CA | ORANGE | −0.42% | −1.57% | 12.86% | 3.490 | 212 | 12.87% |
| 80 | CA | PLACER | −3.25% | −4.09% | 14.05% | 0.580 | 29 | 14.43% |
| 80 | CA | RIVERSIDE | −3.92% | −4.92% | 13.97% | 3.880 | 185 | 14.51% |
| • | • | • | • | • | • | • | • | • |
| • | • | • | • | • | • | • | • | • |
| • | • | • | • | • | • | • | • | • |
| 80 | CA | YUBA | −9.69% | −9.69% | 9.66% | 0.030 | 2 | 16.76% |

276  278  280  282  284

**Fig.6.**

EP 1 638 011 A2

## RAW SCORE BY COUNTY SIGMA TABLE

| RAW SCORE | STATE | COUNTY | MEAN OF VARIANCES | MEDIAN OF VARIANCES | STANDARD DEVIATION OF VARIANCES | SUM OF SQUARES OF VARIANCES | NUMBER OF CASES | SIGMA FOR THIS RAW SCORE LEVEL |
|---|---|---|---|---|---|---|---|---|
| 40 | CA | ORANGE | -7.59% | 0.40% | 20.06% | 0.190 | 5 | 21.78% |
| 41 | CA | ORANGE | -15.70% | -15.70% | — | 0.020 | 1 | — |
| 42 | CA | ORANGE | 17.79% | 24.41% | 29.48% | 6.380 | 4 | 35.60% |
| • | • | • | • | • | • | • | • | • |
| • | • | • | • | • | • | • | • | • |
| • | • | • | • | • | • | • | • | • |
| 67 | CA | ORANGE | 1.07% | 2.32% | 17.90% | 0.580 | 19 | 17.93% |
| 68 | CA | ORANGE | 0.27% | -1.95% | 16.89% | 0.740 | 27 | 16.89% |
| 69 | CA | ORANGE | 1.78% | 3.17% | 14.88 | 0.670 | 31 | 14.44% |
| • | • | • | • | • | • | • | • | • |
| • | • | • | • | • | • | • | • | • |
| • | • | • | • | • | • | • | • | • |
| 98 | CA | ORANGE | -5.20% | -5.56% | 9.31% | 3.030% | 267 | 10.67% |
| 99 | CA | ORANGE | -3.69 | -5.06% | 8.73% | 1.99% | 222 | 9.48% |
| 100 | CA | ORANGE | -4.69 | -5.32% | 8.09% | 4.03% | 462 | 9.35% |

*Fig.7.*

EP 1 638 011 A2

TRIAL SIGMA VALIDATION

```
┌─────────────────────────┐
│   EXPRESS TRIAL SIGMA   │────  294
│     IN SIGMA UNITS      │
└─────────────────────────┘
```

```
┌─────────────────────────┐
296 ──│   DERIVE A MEASURE      │
│     OF DISPERSION       │
└─────────────────────────┘
```

```
┌─────────────────────────┐
│  COMPARE MEASURE OF     │────  298
│  DISPERSION TO THE      │
│   ACCURACY RANGE        │
└─────────────────────────┘
```

```
300                                    302
┌─────────────────────┐      ┌─────────────────────┐
│   IF DISPERSION IS  │      │ IF DISPERSION IS NOT│
│ IN ACCURACY RANGE   │      │  IN ACCURACY RANGE  │
│ ACCEPT TRIAL SIGMA  │      │   CORRECT IT, THEN  │
└─────────────────────┘      │  ACCEPT TRIAL SIGMA │
└─────────────────────┘
```

```
┌─────────────────────────┐
304 ──│     FINALIZE SIGMA      │
└─────────────────────────┘
```

```
┌─────────────────────────┐
│     RETURN SIGMA        │────  306
└─────────────────────────┘
```

## Fig.8.

## Fig. 9.

**NATIONAL SIGMA
PERCENTILE TABLE**

| N | 440,754 | STD. DEVIATION | 0.0369 |
|---|---|---|---|
| MEAN | 0.1489 | MINIMUM | 0.08 |
| MEDIAN | 0.146 | MAXIMUM | 0.5678 |

| PERCENTILES | SIGMA | PERCENTILES | SIGMA | PERCENTILES | SIGMA |
|---|---|---|---|---|---|
| 1 | 0.0825 | 34 | 0.1287 | 67 | 0.1663 |
| 2 | 0.0857 | 35 | 0.1296 | 68 | 0.168 |
| 3 | 0.0886 | 36 | 0.1307 | 69 | 0.1694 |
| 4 | 0.0913 | 37 | 0.1316 | 70 | 0.1707 |
| 5 | 0.0935 | 38 | 0.1325 | 71 | 0.1719 |
| 6 | 0.0955 | 39 | 0.1336 | 72 | 0.1729 |
| 7 | 0.0975 | 40 | 0.1348 | 73 | 0.1743 |
| 8 | 0.0994 | 41 | 0.1358 | 74 | 0.1752 |
| 9 | 0.1015 | 42 | 0.1369 | 75 | 0.1765 |
| 10 | 0.103 | 43 | 0.1379 | 76 | 0.1777 |
| 11 | 0.1043 | 44 | 0.1392 | 77 | 0.1788 |
| 12 | 0.1056 | 45 | 0.1406 | 78 | 0.1805 |
| 13 | 0.1067 | 46 | 0.1416 | 79 | 0.1819 |
| 14 | 0.1075 | 47 | 0.1426 | 80 | 0.1831 |
| 15 | 0.1087 | 48 | 0.1437 | 81 | 0.1846 |
| 16 | 0.1095 | 49 | 0.1447 | 82 | 0.1861 |
| 17 | 0.1105 | 50 | 0.146 | 83 | 0.1873 |
| 18 | 0.1114 | 51 | 0.1473 | 84 | 0.1887 |
| 19 | 0.1126 | 52 | 0.1484 | 85 | 0.1902 |
| 20 | 0.1135 | 53 | 0.1495 | 86 | 0.1917 |
| 21 | 0.1149 | 54 | 0.1506 | 87 | 0.1929 |
| 22 | 0.1163 | 55 | 0.1519 | 88 | 0.1947 |
| 23 | 0.1179 | 56 | 0.153 | 89 | 0.1971 |
| 24 | 0.1186 | 57 | 0.154 | 90 | 0.1988 |
| 25 | 0.1199 | 58 | 0.1554 | 91 | 0.2009 |
| 26 | 0.1206 | 59 | 0.1568 | 92 | 0.2026 |
| 27 | 0.1218 | 60 | 0.1581 | 93 | 0.2045 |
| 28 | 0.1227 | 61 | 0.1598 | 94 | 0.2071 |
| 29 | 0.1238 | 62 | 0.1609 | 95 | 0.21 |
| 30 | 0.1249 | 63 | 0.1619 | 96 | 0.2137 |
| 31 | 0.1259 | 64 | 0.1628 | 97 | 0.2183 |
| 32 | 0.1267 | 65 | 0.1638 | 98 | 0.2256 |
| 33 | 0.1275 | 66 | 0.165 | 99 | 0.2351 |

## Fig. 10.  NATIONAL PERCENTILE TABLE OF VARIANCE MEASURED IN SIGMA UNITS

| N | 440,754 | STD. DEVIATION | 0.9663 |
|---|---|---|---|
| MEAN | =0.1321 | MINIMUM | =5.6919 |
| MEDIAN | =0.1952 | MAXIMUM | 6.1875 |

| PERCENTILES | VARIANCE AS MEASURED IN SIGMA UNITS | PERCENTILES | VARIANCE AS MEASURED IN SIGMA UNITS | PERCENTILES | VARIANCE AS MEASURED IN SIGMA UNITS |
|---|---|---|---|---|---|
| 1 | -2.3344 | 34 | -0.5307 | 67 | 0.1884 |
| 2 | -2.0317 | 35 | -0.5091 | 68 | 0.2143 |
| 3 | -1.8472 | 36 | -0.4874 | 69 | 0.2405 |
| 4 | -1.7120 | 37 | -0.4658 | 70 | 0.2676 |
| 5 | -1.6070 | 38 | -0.4441 | 71 | 0.2947 |
| 6 | -1.5190 | 39 | -0.4231 | 72 | 0.3233 |
| 7 | -1.4428 | 40 | -0.4024 | 73 | 0.3526 |
| 8 | -1.3773 | 41 | -0.3815 | 74 | 0.3826 |
| 9 | -1.3175 | 42 | -0.3606 | 75 | 0.4130 |
| 10 | -1.2631 | 43 | -0.3401 | 76 | 0.4454 |
| 11 | -1.2132 | 44 | -0.3194 | 77 | 0.4788 |
| 12 | -1.1684 | 45 | -0.2989 | 78 | 0.5145 |
| 13 | -1.1254 | 46 | -0.2782 | 79 | 0.5507 |
| 14 | -1.0852 | 47 | -0.2574 | 80 | 0.5879 |
| 15 | -1.0487 | 48 | -0.2361 | 81 | 0.6265 |
| 16 | -1.0121 | 49 | -0.2155 | 82 | 0.6674 |
| 17 | -0.9788 | 50 | -0.1952 | 83 | 0.7103 |
| 18 | -0.9460 | 51 | -0.1743 | 84 | 0.7565 |
| 19 | -0.9144 | 52 | -0.1532 | 85 | 0.8046 |
| 20 | -0.8839 | 53 | -0.1322 | 86 | 0.8567 |
| 21 | -0.8544 | 54 | -0.1103 | 87 | 0.9127 |
| 22 | -0.8258 | 55 | -0.0886 | 88 | 0.9736 |
| 23 | -0.7983 | 56 | -0.0672 | 89 | 1.0369 |
| 24 | -0.7719 | 57 | -0.0467 | 90 | 1.1089 |
| 25 | -0.7456 | 58 | -0.0244 | 91 | 1.1865 |
| 26 | -0.7207 | 59 | 0.0000 | 92 | 1.2741 |
| 27 | -0.6957 | 60 | 0.0186 | 93 | 1.3705 |
| 28 | -0.6714 | 61 | 0.0441 | 94 | 1.4789 |
| 29 | -0.6470 | 62 | 0.0662 | 95 | 1.6054 |
| 30 | -0.6230 | 63 | 0.0894 | 96 | 1.7540 |
| 31 | -0.5993 | 64 | 0.1139 | 97 | 1.9273 |
| 32 | -0.5762 | 65 | 0.1375 | 98 | 2.1500 |
| 33 | -0.5540 | 66 | 0.1624 | 99 | 2.4832 |

## RIGHT-TAIL CONFIDENCE SCORE GENERATION

```
┌─────────────────────────┐
│     GATHER FORECAST      │── 328
│   STANDARD DEVIATION     │
└─────────────────────────┘
             │
             ▼
┌─────────────────────────┐
│  DIVIDE THE RIGHT-TAIL   │
│  CUTOFF NUMBER BY THE    │
330 ──│  FORECAST STANDARD       │
│       DEVIATION          │
└─────────────────────────┘
             │
             ▼
┌─────────────────────────┐
│        FIND THE          │── 332
│     CORRESPONDING        │
│       PERCENTILE         │
└─────────────────────────┘
             │
             ▼
┌─────────────────────────┐
334 ──│   DERIVE RIGHT-TAIL      │
│    CONFIDENCE SCORE      │
└─────────────────────────┘
             │
             ▼
┌─────────────────────────┐
│       RETURN THE         │── 336
│       RIGHT-TAIL         │
│    CONFIDENCE SCORE      │
└─────────────────────────┘
```

*Fig. 11.*

NATIONAL PERCENTILE LOOKUP TABLE MEASURED IN SIGMA UNITS

| PERCENTILES | VARIANCE AS MEASURED IN SIGMA UNITS | CORRESPONDING SIGMA | RIGHT–TAIL CONFIDENCE SCORE |
|---|---|---|---|
| 65 | 0.1375 | 0.7273 | 65 |
| 66 | 0.1624 | 0.6158 | 66 |
| 67 | 0.1884 | 0.5308 | 67 |
| 68 | 0.2143 | 0.4666 | 68 |
| 69 | 0.2405 | 0.4158 | 69 |
| 70 | 0.2676 | 0.3737 | 70 |
| 71 | 0.2947 | 0.3339 | 71 |
| 72 | 0.3233 | 0.3093 | 72 |
| 73 | 0.3526 | 0.2836 | 73 |
| 74 | 0.3826 | 0.2614 | 74 |
| 75 | 0.4130 | 0.2421 | 75 |
| 76 | 0.4454 | 0.2245 | 76 |
| 77 | 0.4788 | 0.2089 | 77 |
| 78 | 0.5145 | 0.1944 | 78 |
| 79 | 0.5507 | 0.1816 | 79 |
| 80 | 0.5879 | 0.1701 | 80 |
| 81 | 0.6265 | 0.1596 | 81 |
| 82 | 0.6674 | 0.1498 | 82 |
| 83 | 0.7103 | 0.1408 | 83 |
| 84 | 0.7565 | 0.1322 | 84 |
| 85 | 0.8046 | 0.1243 | 85 |
| 86 | 0.8567 | 0.1167 | 86 |
| 87 | 0.9127 | 0.1096 | 87 |
| 88 | 0.9736 | 0.1027 | 88 |
| 89 | 1.0369 | 0.0964 | 89 |
| 90 | 1.1089 | 0.0902 | 90 |
| 91 | 1.1865 | 0.0843 | 91 |
| 92 | 1.2741 | 0.0785 | 92 |

*342* *340* *338*

Fig.12.

RESPONSIVE CONFIDENCE SCORE GENERATION

```
                ┌─────────────────────────┐
                │      USER INPUT          │  ── 344
                │   SUGGESTED VALUE        │
                └─────────────────────────┘
                            │
                            ▼
                ┌─────────────────────────┐
   346          │    GET AUTOMATED         │
                │  VALUATION MODEL         │
                │    VALUATION             │
                └─────────────────────────┘
                            │
                            ▼
                ┌─────────────────────────┐
                │     PERFORM              │  ── 348
                │   CALCULATIONS           │
                └─────────────────────────┘
                            │
                            ▼
                ┌─────────────────────────┐
   350          │ FIND THE CORRESPONDING   │
                │     PERCENTILE           │
                └─────────────────────────┘
                            │
                            ▼
                ┌─────────────────────────┐
                │  RETURN A CONFIDENCE     │  ── 352
                │    SCORE AT THE          │
                │  SUGGESTED VALVE         │
                └─────────────────────────┘
```

*Fig. 13.*